(19) Europäisches Patentamt / European Patent Office / Office européen des brevets

(11) **EP 4 696 801 A1**

(12) **EUROPEAN PATENT APPLICATION**
published in accordance with Art. 153(4) EPC

(43) Date of publication:
**18.02.2026 Bulletin 2026/08**

(21) Application number: **24819121.5**

(22) Date of filing: **16.05.2024**

(51) International Patent Classification (IPC):
$C22C\ 38/00$ (2006.01)    $C21D\ 9/46$ (2006.01)
$C22C\ 38/06$ (2006.01)    $C22C\ 38/60$ (2006.01)
$C23C\ 2/06$ (2006.01)    $C23C\ 2/26$ (2006.01)

(52) Cooperative Patent Classification (CPC):
C21D 9/46; C22C 38/00; C22C 38/06; C22C 38/60;
C23C 2/06; C23C 2/26

(86) International application number:
**PCT/JP2024/018163**

(87) International publication number:
**WO 2024/252888 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095361**

(71) Applicant: JFE Steel Corporation
Tokyo, 100-0011 (JP)

(72) Inventors:
• **MINAMI, Hidekazu**
  **Tokyo 100-0011 (JP)**
• **TANAKA, Yuji**
  **Tokyo 100-0011 (JP)**
• **TOJI, Yuki**
  **Tokyo 100-0011 (JP)**
• **WADA, Yusuke**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **HOT-DIP GALVANIZED STEEL SHEET, PRODUCTION METHOD FOR SAME, MEMBER AND PRODUCTION METHOD FOR SAME, AND AUTOMOBILE SKELETON STRUCTURE COMPONENT OR AUTOMOBILE REINFORCING COMPONENT COMPRISING MEMBER**

(57) It is an object to provide a hot-dip galvanized steel sheet that has a high YR, exhibits high stretch flangeability immediately after production and high bendability immediately after production, and provides improved trimmed edge quality and to provide a method for producing the hot-dip galvanized steel sheet and a member.

The hot-dip galvanized steel sheet includes: a base steel sheet; and a hot-dip galvanized layer on a surface of the base steel sheet. The base steel sheet has a prescribed chemical composition and has, at a position 1/4 of the thickness of the base steel sheet, a microstructure including martensite at an area fraction of 30% or more, ferrite at an area fraction of 70% or less, and retained austenite at a volume fraction of 20.0% or less. The amount of low-temperature diffusive hydrogen is 0.015 ppm by mass or less. Here, the amount of low-temperature diffusive hydrogen is an amount of hydrogen released from the base steel sheet when the base steel sheet is heated from room temperature to 50°C 24 hours after production of the hot-dip galvanized steel sheet. In the hot-dip galvanized layer, the number density of cracks penetrating through the hot-dip galvanized layer is 30 cracks/mm or more, and the full width at half maximum of the 51 phase in the hot-dip galvanized layer is 0.100 degrees or more.

**Description**

Technical Field

The present invention relates to a hot-dip galvanized steel sheet, a method for producing the same, a member, a method for producing the member, and an automotive framework structural part or an automotive reinforcing part including the member.

Background Art

To simultaneously reduce $CO_2$ emissions by reducing vehicle weight and improve crashworthiness by reducing vehicle body weight, the strength of steel sheets for automobiles is being increased. Moreover, new legal regulations are being introduced continuously. Therefore, high strength steel sheets are being increasingly used for main structural and reinforcing parts that form frameworks of automobile cabins (these parts are hereinafter referred to also as "automotive framework structural parts") for the purpose of increasing vehicle body strength. In particular, high strength steel sheets with a tensile strength (hereinafter referred to simply as "TS") of 980 MPa or higher are being increasingly used.

High strength steel sheets used for automotive framework structural parts etc. are required to exhibit high part strength when formed into automotive framework structural parts. One effective way to increase the part strength is to increase the yield ratio (= YS/TS × 100, which may be hereinafter referred to simply as YR) of the steel sheets. In this manner, absorbable impact energy at the time of automobile collision (which may be hereinafter referred to simply as absorbable impact energy) increases.

Among automotive framework structural parts, crash boxes, for example, have punched edges and bent portions. Therefore, it is preferable from the viewpoint of formability that steel sheets with high stretch flangeability and bendability are used for these parts. Since the stretch flangeability and bendability are evaluated immediately after production, it is necessary to ensure high stretch flangeability and bendability immediately after the production.

Moreover, from the viewpoint of rust proof performance of vehicle bodies, hot-dip galvanized steel sheets obtained through hot-dip galvanization are sometimes used for steel sheets used as materials of automotive framework structural parts.

As an example of a technique related to such hot-dip galvanized steel sheets, Patent Literature 1 discloses "a high strength hot-dip galvanized steel sheet including a base steel sheet and a hot-dip galvanized layer formed on the surface of the base steel sheet, the high strength hot-dip galvanized steel sheet having a tensile strength of 780 MPa or more, wherein the base steel sheet has a chemical composition containing, in % by mass, C: 0.050% or more and 0.200% or less, Si: 0.10% or more and 0.90% or less, Mn: 2.00% or more and 3.50% or less, P: 0.001% or more and 0.100% or less, S: 0.0200% or less, Al: 1.000% or less, N: 0.0100% or less, Ca: 0.0200% or less, and Cr: 0.300% or less, with the balance being Fe and incidental impurities, wherein [%Mn]/[%Si] satisfies the relation of 2.9 or more and 11.7 or less, wherein the base steel sheet has a steel microstructure in which the total area fraction of one or two selected from the group consisting of bainite and ferrite is 5% or more and 85% or less, in which the area fraction of tempered martensite is 65% or less, in which the area fraction of quenched martensite is 5% or more and 40% or less, and in which the area fraction of retained austenite is 5.0% or less, wherein the ratio of an increase in Si concentration to an increase in Mn concentration in a surface layer of the base steel sheet is 0.7 or more and 1.3 or less, wherein the amount of diffusive hydrogen in the base steel sheet is 0.80 ppm by mass or less, and wherein [% Mn] and [% Si] are contents (% by mass) of Mn and Si, respectively, in the steel."

Citation List

Patent Literature

PTL 1: Japanese Patent No. 6777267

Summary of Invention

Technical Problem

In a continuous annealing line, the edges of a coil are trimmed on the exit side of the production line, and therefore stable trimmed edges are sometimes required. However, in the hot-dip galvanized steel sheet described in Patent Literature 1, no consideration is given to the quality of the trimmed edges. Moreover, in the manufacturing method of the galvanized steel sheet, immediately after the production of the hot-dip galvanized steel sheet, i.e., when the hot-dip galvanized steel sheet is wound into a coil on the exit side of the continuous annealing line, a large amount of diffusive hydrogen is contained in the steel sheet, and the amount of diffusive hydrogen decreases with time at room temperature. Therefore, the amount of diffusive hydrogen in the steel sheet remains high until 24 hours after production, so that it is difficult to obtain high stretch flangeability and bendability. In this case, stable trimmed edges may not be obtained.

Therefore, particularly from the viewpoint of increasing the use ratio of hot-dip galvanized steel sheets in automotive framework structural parts, there is a need to develop a hot-dip galvanized steel sheet that has a high YR, exhibits high stretch flangeability immediately after production and high bendability immediately after production, and provides improved trimmed edge quality.

The present invention has been developed in view of the above circumstances, and it is an object to provide a hot-dip galvanized steel sheet that has a high YR, exhibits high stretch flangeability immediately after production and high bendability immediately after production, and provides improved trimmed edge quality.

It is another object of the invention to provide a method for producing the hot-dip galvanized steel sheet. It is further object of the invention to provide a member prepared using the hot-dip galvanized steel sheet.

The phrase "high YR" means that the YR is 55% or more. The YR is determined using the following formula (1).

$$YR = YS \ / \ TS \ \times \ 100 \qquad (1)$$

The TS and YS are measured according to JIS Z 2241.

The phrase "high stretch flangeability immediately after production" means that the hole expansion ratio (hereinafter referred to simply as $\lambda$) measured 24 hours after production according to JIS Z 2256 is 30% or more.

The phrase "high bendability immediately after production" means that, when a bending test is performed according to JIS Z 2248 (the details will be described later in Examples), the length of a crack in a ridge portion at the apex of the bend is 200 $\mu$m or less for all the samples when measured 24 hours after production. In this case, the bendability is determined by performing the bending test using the V-block method with a bending angle of 90 degrees. Specifically, the bending test is performed on five samples, with the bending radius (R) set such that the value of R/t obtained by dividing the bending radius (R) by the sheet thickness (t) is about 4.5, i.e., 4.3 to 4.7. Next, for each of the five samples, the length of a crack in the ridge portion at the apex of the bend is evaluated. When the crack length is 200 $\mu$m or less in every sample, the bendability immediately after production is considered high.

The phrase "high trimmed edge quality" means that no cracking is found at trimmed edges described later in Examples.

Solution to Problem

The inventors have conducted extensive studies to achieve foregoing objects. The inventors have thus found the following.

(1) A base steel sheet having a prescribed chemical composition is used. The base steel sheet is configured to have a steel microstructure containing a prescribed amount of martensite (quenched martensite, tempered martensite, and bainite). In this manner, a high YR is obtained.

(2) The number density of cracks penetrating through the coated layer is adjusted to 30 cracks/mm or more, and the full width at half maximum of the $\delta 1$ phase in the coated layer is adjusted to 0.100 degrees or more. In this manner, the amount of low-temperature diffusive hydrogen in the base steel sheet 24 hours after production can be reduced. Therefore, high stretch flangeability and high bendability can be obtained, and the trimmed edge quality can be improved.

The present invention has been completed by conducting further studies on the basis of the above findings. The present invention is summarized as follows.

[1] A hot-dip galvanized steel sheet including: a base steel sheet; and a hot-dip galvanized layer on a surface of the base steel sheet, wherein the base steel sheet has a chemical composition containing, in % by mass, C: 0.030% or more and 0.500% or less, Si: 0.01% or more and 2.50% or less, Mn: 0.10% or more and 5.00% or less, P: 0.100% or less, S: 0.0200% or less, Al: 0.100% or less, N: 0.0100% or less, and O: 0.0100% or less, with the balance being Fe and incidental impurities, wherein the base steel sheet has, at a position 1/4 of a thickness of the base steel sheet, a microstructure including martensite at an area fraction of 30% or more, ferrite at an area fraction of 70% or less, and retained austenite at a volume fraction of 20.0% or less, wherein an amount of low-temperature diffusive hydrogen is 0.015 ppm by mass or less, the amount of low-temperature diffusive hydrogen being an amount of hydrogen released from the base steel sheet when the base steel sheet is heated from room temperature to 50°C 24 hours after production of the hot-dip galvanized steel sheet, wherein, in the hot-dip galvanized steel sheet, a number density of cracks penetrating through the hot-dip galvanized layer is 30 cracks/mm or more, and wherein a full width at half

maximum of a $\delta 1$ phase in the hot-dip galvanized layer is 0.100 degrees or more.

[2] The hot-dip galvanized steel sheet according to [1], wherein the chemical composition further contains, in % by mass, at least one element selected from Ti: 0.200% or less, Nb: 0.200% or less, V: 0.200% or less, Ta: 0.10% or less, W: 0.10% or less, B: 0.0100% or less, Cr: 1.00% or less, Mo: 1.00% or less, Co: 0.010% or less, Ni: 1.00% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less.

[3] The hot-dip galvanized steel sheet according to [1] or [2], wherein the hot-dip galvanized layer is a hot-dip galvannealed layer.

[4] A member prepared using the hot-dip galvanized steel sheet according to any of [1] to [3].

[5] An automotive framework structural part or an automotive reinforcing part, wherein the automotive framework structural part or the automotive reinforcing part includes the member according to [4].

[6] A method for producing a hot-dip galvanized steel sheet, the method including: hot-rolling a steel slab having the chemical composition according to [1] or [2] to obtain a hot rolled steel sheet; subsequently pickling the hot rolled sheet to obtain a pickled sheet; subsequently subjecting the pickled sheet to cold rolling at a cumulative rolling reduction ratio of 20% or more and 75% or less to obtain a cold rolled steel sheet; subsequently annealing the cold rolled steel sheet under a condition of an annealing temperature of 780°C or higher; subsequently subjecting the resulting cold rolled steel sheet to hot-dip galvanizing treatment to obtain a galvanized steel sheet; subsequently cooling the galvanized steel sheet under a condition of an average cooling rate of 1.0°C/s or more in a temperature range of 250°C or higher and 400°C or lower; and subsequently subjecting the resulting galvanized steel sheet to working such that in a surface layer of the galvanized steel sheet a uniaxial tensile strain of 0.1% or more is imparted.

[7] The method for producing a hot-dip galvanized steel sheet according to [6], wherein, during the cooling of the galvanized steel sheet, heat retention is performed in a temperature range of 100°C or higher and 450°C or lower for 5 seconds or longer, and the resulting galvanized steel sheet is cooled and then subjected to the working.

[8] The method for producing a hot-dip galvanized steel sheet according to [6], wherein, during the cooling of the galvanized steel sheet, the cooling is stopped at a cooling stop temperature of 250°C or lower, and then the galvanized steel sheet is reheated to a reheating temperature range of (the cooling stop temperature + 50°C) or higher and 450°C or lower, subjected to heat retention in the reheating temperature range for 5 seconds or longer, cooled, and then subjected to the working.

[9] The method for producing a hot-dip galvanized steel sheet according to [6], wherein, during the cooling of the galvanized steel sheet, the cooling is stopped at a cooling stop temperature of 250°C or lower, and then the galvanized steel sheet is subjected to the working, subsequently reheated to a reheating temperature range of (the cooling stop temperature + 50°C) or higher and 450°C or lower, subjected to heat retention in the reheating temperature range for 5 seconds or longer, and then cooled.

[10] The method for producing a hot-dip galvanized steel sheet according to any of [6] to [9], wherein, after the hot-dip galvanizing treatment, the steel sheet is subjected to galvannealing treatment.

[11] The method for producing a hot-dip galvanized steel sheet according to any of [6] to [10], wherein the cold rolling is performed such that a sheet traveling speed in a final pass is 50 mpm or more.

[12] A method for producing a member, the method including the step of subjecting the hot-dip galvanized steel sheet according to any of [1] to [3] to at least one of forming and joining to thereby produce the member. Advantageous Effects of Invention

According to the present invention, a hot-dip galvanized steel sheet can be obtained which has a high YR, exhibits high stretch flangeability and high bendability, and can provide improved trimmed edge quality. The high YR allows high part strength to be obtained when the steel sheet is applied to automotive framework structural parts.

In particular, the hot-dip galvanized steel sheet of the invention has various excellent properties and can be applied to, for example, automotive framework structural parts with different sizes and shapes. Therefore, the weight of vehicle bodies can be reduced, and the fuel economy can be improved, so the hot-dip galvanized steel sheet is extremely valuable for industrial applications. Description of Embodiments

Embodiments of the present invention will next be described. However, the present invention is not limited to the following embodiments.

Base steel sheet:

First, the chemical composition of a base steel sheet of a hot-dip galvanized steel sheet according to an embodiment of the invention will be described. All units in the chemical composition are "% by mass" and are expressed simply by "%" unless otherwise specified.

[C: 0.030% or more and 0.500% or less]

C is one of the important basic components of the steel. In particular, in the present disclosure, C is an important element that affects the area fractions of martensite and ferrite, the volume fraction of retained austenite, and the amount of low-temperature diffusive hydrogen in the base steel sheet 24 hours after production. When the content of C is less than 0.030%, the area fraction of martensite decreases, and the area fraction of ferrite increases, which makes it difficult to achieve the desired YR. When the content of C exceeds 0.500%, the fraction of martensite increases, and the fraction of quenched martensite included in martensite increases, so that the amount of low-temperature diffusive hydrogen in the base steel sheet 24 hours after production increases. As a result, the λ and bendability deteriorate, and the trimmed edge quality deteriorates. Therefore, the content of C is 0.030% or more and 0.500% or less. The content of C is preferably 0.080% or more. The content of C is preferably 0.400% or less. The content of C is more preferably 0.110% or more. The content of C is more preferably 0.350% or less.

[Si: 0.01% or more and 2.50% or less]

Si is one of the important basic components of the steel. In particular, in the present disclosure, Si reduces the formation of carbides during annealing, facilitates the formation of retained austenite, and is an element that affects the volume fraction of retained austenite.
Moreover, Si forms an internal oxidized layer in the surface layer of the steel sheet, and this induces the formation of cracks in the coating when strain is imparted to the surface layer of the galvanized steel sheet. Therefore, Si is an important element that affects the number density of cracks penetrating through the galvanized layer. To obtain these effects, the content of Si is set to 0.01% or more. If the content of Si exceeds 2.50%, the volume fraction of retained austenite increases, and therefore the amount of low-temperature diffusive hydrogen in the base steel sheet 24 hours after production increases. In this case, the λ and bendability deteriorate, and the trimmed edge quality deteriorates. Therefore, the content of Si is 0.01% or more and 2.50% or less. The content of Si is preferably 0.20% or more. The content of Si is preferably 2.00% or less. The content of Si is more preferably 0.25% or more. The content of Si is more preferably 1.50% or less.

[Mn: 0.10% or more and 5.00% or less]

Mn is one of the important basic components of the steel. In particular, in the present disclosure, Mn is an important element that affects the area fractions of martensite and ferrite and the volume fraction of retained austenite. Mn forms an internal oxidized layer in the surface layer of the steel sheet, and this induces the formation of cracks in the coating when strain is imparted to the galvanized layer of the galvanized steel sheet. Therefore, Mn is an important element that affects the number density of cracks penetrating through the galvanized layer. To obtain these effects, the content of Mn is set to 0.10% or more. When the content of Mn exceeds 5.00%, the fraction of martensite increases, and the fraction of quenched martensite included in martensite increases, so that the amount of low-temperature diffusive hydrogen in the base steel sheet 24 hours after production increases. As a result, the λ and bendability deteriorate, and the trimmed edge quality deteriorates. Therefore, the content of Mn is 0.10% or more and 5.00% or less. The content of Mn is preferably 1.00% or more. The content of Mn is preferably 4.00% or less. The content of Mn is more preferably 2.00% or more. The content of Mn is more preferably 3.50% or less.

[P: 0.100% or less]

When the content of P is excessively large, it segregates at prior-austenite grain boundaries and embrittles the grain boundaries, and the ultimate deformation ability of the steel sheet deteriorates, causing deterioration of the λ and bendability. Therefore, the content of P must be 0.100% or less. No particular limitation is imposed on the lower limit of the content of P. However, since P is a solid solution strengthening element and increases the strength of the steel sheet, the content of P is preferably 0.001% or more. Therefore, the content of P is 0.100% or less. The content of P is preferably 0.001% or more. The content of P is preferably 0.070% or less.

[S: 0.0200% or less]

S is present as sulfides and causes deterioration of the ultimate deformation ability of the steel, so that the λ and bendability deteriorate. Therefore, the content of S must be 0.0200% or less. No particular limitation is imposed on the lower limit of the content of S. However, in view of the limitations on the production technique, the content of S is preferably 0.0001% or more. Therefore, the content of S is 0.0200% or less. The content of S is preferably 0.0001% or more. The content of S is preferably 0.0050% or less.

[Al: 0.100% or less]

When the content of Al is excessively large, the $A_3$ transformation temperature increases, and a large amount of ferrite is contained in the microstructure, which makes it difficult to achieve the desired YR. Therefore, the content of Al must be 0.100% or less. No particular limitation is imposed on the lower limit of the content of Al. However, since Al reduces the formation of carbides and facilitates the formation of retained austenite during continuous annealing, the content of Al is preferably 0.001% or more. Therefore, the content of Al is 0.100% or less. The content of Al is preferably 0.001% or more. The content of Al is preferably 0.050% or less.

[N: 0.0100% or less]

N is present as nitrides and causes deterioration of the ultimate deformation ability of the steel sheet, so that the λ and bendability deteriorate. Therefore, the content of N must be 0.0100% or less. No particular limitation is imposed on the lower limit of the content of N. However, in view of the limitations on the production technique, the content of N is preferably 0.0005% or more. Specifically, the content of N is 0.0100% or less. The content of N is preferably 0.0005% or more. The content of N is preferably 0.0050% or less.

[O: 0.0100% or less]

O is present as oxides and causes deterioration of the ultimate deformation ability of the steel sheet, so that the λ and bendability deteriorate. Therefore, the content of O must be 0.0100% or less. No particular limitation is imposed on the lower limit of the content of O. However, in view of the limitations on the production technique, the content of O is preferably 0.0001% or more. Specifically, the content of O is 0.0100% or less. The content of O is preferably 0.0001% or more. The content of O is preferably 0.0050% or less.

The base steel sheet of the hot-dip galvanized steel sheet according to the present embodiment of the present invention has a chemical composition containing the elements described above and further containing Fe and incidental impurities as the balance. Preferably, the base steel sheet in the present embodiment of the present invention has a chemical composition containing the elements described above, with the balance being Fe and incidental impurities. The incidental impurities include Zn, Pb, and As. The allowable total content of these impurities is 0.100% or less.

The chemical composition of the base steel sheet of the hot-dip galvanized steel sheet of the present disclosure may further contain, in addition to the essential components described above, in % by mass, at least one element or a combination of elements selected from Ti: 0.200% or less, Nb: 0.200% or less, V: 0.200% or less, Ta: 0.10% or less, W: 0.10% or less, B: 0.0100% or less, Cr: 1.00% or less, Mo: 1.00% or less, Ni: 1.00% or less, Co: 0.010% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less.

[Ti: 0.200% or less]

Ti forms a large number of coarse precipitates and inclusions and causes deterioration of the ultimate deformation ability of the steel sheet. When the content of Ti is more than 0.200%, the λ and bendability deteriorate. Therefore, the content of Ti is set to 0.200% or less. No particular limitation is imposed on the lower limit of the content of Ti. By setting the content of Ti to 0.001% or more, a fine carbide, nitride, or carbonitride is formed during hot rolling or continuous annealing. In this case, the strength of the steel sheet increases, and the YR can be controlled within the desired range. Therefore, the content of Ti is set to preferably 0.001% or more. When Ti is added, its content is set to 0.200% or less. The content of Ti is preferably 0.001% or more. The content of Ti is preferably 0.100% or less.

[Nb: 0.200% or less]

Nb forms a large number of coarse precipitates and inclusions, and this causes deterioration of the ultimate deformation ability of the steel sheet. When the content of Nb is more than 0.200%, the λ and bendability deteriorate. Therefore, the content of Nb is 0.200% or less. No particular limitation is imposed on the lower limit of the content of Nb. When the content of Nb is 0.001% or more, a fine carbide, nitride, or carbonitride is formed during hot rolling or continuous annealing. In this case, the strength of the steel sheet increases, and the YR can be controlled within the desired range. Therefore, the content of Nb is preferably 0.001% or more. When Nb is added, its content is set to 0.200% or less. The content of Nb is preferably 0.001% or more. The content of Nb is preferably 0.100% or less.

[V: 0.200% or less]

V forms a large number of coarse precipitates and inclusions, and this causes deterioration of the ultimate deformation ability of the steel sheet. When the content of V is more than 0.200%, the $\lambda$ and bendability deteriorate. Therefore, the content of V is set to 0.200% or less. No particular limitation is imposed on the lower limit of the content of V. When the content of V is 0.001% or more, a fine carbide, nitride, or carbonitride is formed during hot rolling or continuous annealing. In this case, the strength of the steel sheet increases, and the YR can be controlled within the desired range. Therefore, the content of V is preferably 0.001% or more. When V is added, its content is set to 0.200% or less. The content of V is preferably 0.001% or more. The content of V is preferably 0.100% or less.

[Ta: 0.10% or less and W:0.10% or less]

When the contents of Ta and W are each more than 0.10%, a large number of coarse precipitates and inclusions are formed, and the ultimate deformation ability of the steel sheet deteriorates, so that the $\lambda$ and bendability deteriorate. Therefore, the contents of Ta and W are each set to 0.10% or less. No particular limitation is imposed on the lower limits of the contents of Ta and W. However, Ta and W form fine carbides, nitrides, or carbonitrides during hot rolling or continuous annealing. This contributes to an increase in the strength of the steel sheet. Therefore, the contents of Ta and W are each preferably 0.01% or more. When Ta and W are added, their contents are each set to 0.10% or less. The contents of Ta and W are each preferably 0.01% or more. The contents of Ta and W are each preferably 0.08% or less.

[B: 0.0100% or less]

When the content of B is 0.0100% or less, no cracking occurs in the steel sheet during casting or hot rolling, and deterioration of the ultimate deformation ability of the steel sheet does not occur, so that the $\lambda$ and bendability do not deteriorate. Therefore, the content of B is set to 0.0100% or less. Now, no particular limitation is imposed on the lower limit of the content of B. However, since B is an element that segregates at austenite grain boundaries during annealing to improve the hardenability, the content of B is more preferably 0.0003% or more. When B is contained, its content is set to 0.0100% or less. The content of B is more preferably 0.0003% or more. The content of B is still more preferably 0.0080% or less.

[Cr: 1.00% or less, Mo: 1.00% or less, and Ni: 1.00% or less]

When the contents of Cr, Mo, and Ni are each more than 1.00%, the number of coarse precipitates and inclusions increases, and the ultimate deformation ability of the steel sheet deteriorates, so that the $\lambda$ and bendability deteriorate. Therefore, the contents of Cr, Mo, and Ni are each set to 1.00% or less. Now, no particular limitation is imposed on the lower limits of the contents of Cr, Mo, and Ni. However, since these elements improve the hardenability, the contents of Cr, Mo, and Ni are each preferably 0.01% or more. Therefore, when these elements are added, the contents of Cr, Mo, and Ni are each set to 1.00% or less. The contents of Cr, Mo, and Ni are each preferably 0.01% or more. The contents of Cr, Mo, and Ni are each preferably 0.80% or less.

[Co: 0.010% or less]

When the content of Co is more than 0.010%, the number of coarse precipitates and inclusions increases, and the ultimate deformation ability of the steel sheet deteriorates, so that the $\lambda$ and bendability deteriorate. Therefore, the content of Co is set to 0.010% or less. Now, no particular limitation is imposed on the lower limit of the content of Co. However, since Co is an element that improves the hardenability, the content of Co is preferably 0.001% or more. Therefore, when Co is added, its content is set to 0.010% or less. The content of Co is preferably 0.001% or more. The content of Co is preferably 0.008% or less.

[Cu: 1.00% or less]

When the content of Cu is more than 1.00%, the number of coarse precipitates and inclusions increases, and the ultimate deformation ability of the steel sheet deteriorates, so that the $\lambda$ and bendability deteriorate. Therefore, the content of Cu is set to 1.00% or less. Now, no particular limitation is imposed on the lower limit of the content of Cu. However, since Cu is an element that improves the hardenability, the content of Cu is preferably 0.01% or more. Therefore, when Cu is added, its content is set to 1.00% or less. The content of Cu is preferably 0.01% or more. The content of Cu is preferably 0.80% or less.

[Sn: 0.200% or less]

When the content of Sn is more than 0.200%, cracks are formed in the steel sheet during casting or hot rolling, and the ultimate deformation ability of the steel sheet deteriorates, so that the $\lambda$ and bendability deteriorate. Therefore, the content of Sn is set to 0.200% or less. No particular limitation is imposed on the lower limit of the content of Sn. However, since Sn is an element that improves the hardenability, the content of Sn is preferably 0.001% or more. Therefore, when Sn is added, its content is set to 0.200% or less. The content of Sn is preferably 0.001% or more. The content of Sn is preferably 0.100% or less.

[Sb: 0.200% or less]

If the content of Sb is more than 0.200%, the number of coarse precipitates and inclusions increases, and the ultimate deformation ability of the steel sheet deteriorates, so that the $\lambda$ and bendability deteriorate. Therefore, the content of Sb is set to 0.200% or less. No particular limitation is imposed on the lower limit of the content of Sb. However, since Sb is an element that can control the thickness of a softened surface layer to adjust the strength, the content of Sb is preferably 0.001% or more. Therefore, when Sb is added, its content is set to 0.200% or less. The content of Sb is preferably 0.001% or more. The content of Sb is preferably 0.100% or less.

[Ca: 0.0100% or less, Mg: 0.0100% or less, and REMs: 0.0100% or less]

When the contents of Ca, Mg, and REMs are each more than 0.0100%, the number of coarse precipitates and inclusions increases, and the ultimate deformation ability of the steel sheet deteriorates, so that the $\lambda$ and bendability deteriorate. Therefore, the contents of Ca, Mg, and REMs are each set to 0.0100% or less. No particular limitation is imposed on the lower limits of the contents of Ca, Mg, and REMs. However, since these elements spheroidize nitrides and sulfides and improve the ultimate deformation ability of the steel sheet, the contents of Ca, Mg, and REMs are each preferably 0.0005% or more. Therefore, when Ca, Mg, and REMs are added, their contents are each set to 0.0100% or less. The contents of Ca, Mg, and REMs are each preferably 0.0005% or more. The contents of Ca, Mg, and REMs are each preferably 0.0050% or less. The REMs (rare earth metals) are a generic term for Sc, Y, and 15 elements from lanthanum (La) with an atomic number of 57 to lutetium (Lu) with an atomic number of 71, and the content of REMs is the total content of these elements.

[Zr: 0.100% or less and Te: 0.100% or less]

When the contents of Zr and Te are each more than 0.100%, the amount of coarse precipitates and inclusions increases, and the ultimate deformation ability of the steel sheet deteriorates, so that the $\lambda$ and bendability deteriorate. Therefore, the contents of Zr and Te must be each 0.100% or less. No particular limitation is imposed on the lower limits of the contents of Zr and Te. However, since Zr and Te are elements that spheroidize nitrides and sulfides and improve the ultimate deformation ability of the steel sheet, their contents are each more preferably 0.001% or more. Therefore, when Zr and Te are added, their contents are each set to 0.100% or less. The contents of Zr and Te are each preferably 0.001% or more. The contents of Zr and Te are each preferably 0.080% or less.

[Hf: 0.10% or less]

When the content of Hf is more than 0.10%, the number of coarse precipitates and inclusions increases, and the ultimate deformation ability of the steel sheet deteriorates, so that the $\lambda$ and bendability deteriorate. Therefore, the content of Hf is set to 0.10% or less. No particular limitation is imposed on the lower limit of the content of Hf. However, since Hf is an element that spheroidizes nitrides and sulfides and improves the ultimate deformation ability of the steel sheet, the content of Hf is set to preferably 0.01% or more. Therefore, when Hf is added, its content is set to 0.10% or less. The content of Hf is preferably 0.01% or more. The content of Hf is preferably 0.08% or less.

[Bi: 0.200% or less]

When the content of Bi is more than 0.200%, the number of coarse precipitates and inclusions increases, and the ultimate deformation ability of the steel sheet deteriorates, so that the $\lambda$ and bendability deteriorate. Therefore, the content of Bi is set to 0.200% or less. Now, no particular limitation is imposed on the lower limit of the content of Bi. However, since Bi is an element that reduces the degree of segregation, its content is preferably 0.001% or more. Therefore, when Bi is added, its content is set to 0.200% or less. The content of Bi is preferably 0.001% or more. The content of Bi is preferably 0.100% or less.

Even when the contents of Ti, Nb, V, Ta, W, B, Cr, Mo, Ni, Co, Cu, Sn, Sb, Ca, Mg, REMs, Zr, Te, Hf, and Bi described above are less than their preferred lower limits, the effects of the invention are not impaired. In this case, they are contained as incidental impurities.

Next, the microstructure of the base steel sheet of the hot-dip galvanized steel sheet according to the present embodiment of the invention will be described.

[Area fraction of martensite at position 1/4 of thickness of base steel sheet: 30% or more]

The microstructure of the base steel sheet includes a prescribed amount of martensite. Specifically, at a position 1/4 of the thickness of the base steel sheet, the area fraction of martensite is set to 30% or more. In this manner, the desired YR, high λ, and high bendability can be achieved. Therefore, the area fraction of martensite at a position 1/4 of the thickness of the base steel sheet is set to 30% or more. The area fraction of martensite at a position 1/4 of the thickness of the base steel sheet is preferably 35% or more, more preferably 40% or more, and still more preferably 45% or more. Now, no particular limitation is imposed on the upper limit of the area fraction of martensite at a position 1/4 of the thickness of the base steel sheet. From the viewpoint of obtaining a high YR, high λ, and high bendability, the area fraction of martensite at a position 1/4 of the thickness of the base steel sheet is preferably 99% or less, more preferably 98% or less, and still more preferably 97% or less. The term "martensite" encompasses quenched martensite (fresh martensite), tempered martensite, and bainite.

[Area fraction of ferrite at position 1/4 of thickness of base steel sheet: 70% or less]

By setting the area fraction of ferrite at a position 1/4 of the thickness of the base steel sheet to 70% or less, the YR increases. Moreover, the λ increases, and the bendability is also improved. Therefore, the area fraction of ferrite at a position 1/4 of the thickness of the base steel sheet is set to 70% or less. The area fraction of ferrite at a position 1/4 of the thickness of the base steel sheet is preferably 60% or less. The area fraction of ferrite at a position 1/4 of the thickness of the base steel sheet may be 0%. However, from the viewpoint of reducing the amount of low-temperature diffusive hydrogen in the base steel sheet 24 hours after production and of improving the trimmed edge quality, the area fraction of ferrite at a position 1/4 of the thickness of the base steel sheet is preferably 1% or more and more preferably 2% or more. The ferrite as used herein is sometimes defined as bainitic ferrite.

A method for measuring the area fraction of martensite (quenched martensite, tempered martensite, and bainite) and the area fraction of ferrite (bainitic ferrite) at a position 1/4 of the thickness of the base steel sheet is as follows.

A sample is cut from the steel sheet such that a thicknesswise cross section (L cross section) parallel to the rolling direction serves as an observation surface, and the observation surface is mirror-polished using a diamond paste. Then the resulting observation surface is etched with 3 vol.% nital to make the microstructure visible. A position 1/4 of the thickness of the base steel sheet is used as an observation position, and an SEM (Scanning Electron Microscope) is used to observe three viewing fields each having a viewing area of 17 μm × 23 μm at a magnification of 5000X under the condition of an acceleration voltage of 15 kV. The obtained microstructure images are processed using Adobe Photoshop from Adobe Systems as follows. Specifically, in the three viewing fields, the areas of constituent microstructures (ferrite (bainitic ferrite) and martensite (tempered martensite, bainite, and quenched martensite)) are divided by the measurement area to calculate their area fractions, and the averages of these values are used as the area fractions of these microstructures. In the microstructure images, ferrite (bainitic ferrite) appears as a concave microstructure and is a flat microstructure containing no carbides. Tempered martensite and bainite appear as concave microstructures and are microstructures containing fine carbides, and quenched martensite appears as convex portions and is a microstructure with fine irregularities thereinside. These microstructures can be distinguished from each other. However, it is unnecessary that tempered martensite and bainite be distinguishable from each other because their total area fraction is used to determine the area fraction of martensite.

[Volume fraction of retained austenite at position 1/4 of thickness of base steel sheet: 20.0% or less]

When the volume fraction of retained austenite in the microstructure of the base steel sheet is 20.0% or less, the amount of low-temperature diffusive hydrogen in the base steel sheet 24 hours after production can be reduced. Therefore, the volume fraction of retained austenite is set to 20.0% or less. When the volume fraction of retained austenite is 15.0% or less, the concentration of carbon in retained austenite increases, and stress-induced transformation of retained austenite during tensile deformation is suppressed, so that a high YR can be achieved. Therefore, the volume fraction of retained austenite is preferably 15.0% or less, more preferably 10.0% or less, and still more preferably 5.0% or less. No particular limitation is imposed on the lower limit of the volume fraction of retained austenite. Even when the volume fraction of retained austenite is 0%, the desired properties can be obtained.

The volume fraction of retained austenite at a position 1/4 of the thickness of the base steel sheet is measured as follows.

The steel sheet is ground such that a position 1/4 of the thickness from the surface layer of the base steel sheet (a position corresponding to 1/4 of the thickness in the depth direction from the surface of the base steel sheet) serves as an observation surface, and the resulting surface is further polished by 0.1 mm by chemical polishing. Then, on the polished surface, the CoK$\alpha$ line from an X-ray diffractometer is used to measure the integrated reflection intensities from (200), (220), and (311) planes of fcc iron (austenite) and (200), (211), and (220) planes of bcc iron. Next, the volume fraction of austenite is determined from the intensity ratios of the integrated reflection intensities from the above planes of fcc iron (austenite) to the integrated reflection intensities from the above planes of bcc iron and is used as the volume fraction of retained austenite.

The area fraction of remaining microstructures other than martensite, ferrite, and retained austenite at a position 1/4 of the thickness of the base steel sheet is preferably 5% or less. Examples of the remaining microstructures include known microstructures of other steel sheets such as: pearlite; and carbides such as cementite and metastable carbides (such as epsilon ($\varepsilon$) carbide, eta ($\eta$) carbide, and chi ($\chi$) carbide). The remaining microstructures may be identified, for example, by observation under an SEM.

The area fraction of the remaining microstructures is calculated from the following formula. In the following formula, the volume fraction of retained austenite is assumed to be substantially equal to its area fraction.

[Area fraction (%) of remaining microstructures] = 100 - [area fraction of martensite (%)] - [area fraction of ferrite (%)] - [area fraction (%) of retained austenite]

In the hot-dip galvanized steel sheet according to the present embodiment of the invention, it is important to appropriately control the amount of low-temperature diffusive hydrogen in the base steel sheet.

[Amount of low-temperature diffusive hydrogen in base steel sheet 24 hours after production: 0.015 ppm by mass or less]

The amount of low-temperature diffusive hydrogen in the base steel sheet 24 hours after production is an extremely important factor. The inventors have conducted extensive studies in order to obtain a hot-dip galvanized steel sheet that has a high YR, exhibits high $\lambda$ and bendability immediately after production, and provides high trimmed edge quality. The inventors have thus found that the amount of low-temperature diffusive hydrogen in the base steel sheet 24 hours after production, i.e., the amount of hydrogen released from the base steel sheet when the base steel sheet is heated from room temperature to 50°C 24 hours after production, affects the above properties. In particular, the inventors have found that, in the continuous annealing line, the above-described amount of hydrogen has a large influence on the quality of the edges trimmed on the exit side of the production line. Specifically, the inventors have found that the trimmed edge quality depends not so much on the amount of hydrogen released from the base steel sheet in a high-temperature region when the base steel sheet is heated as on the amount of hydrogen released in a low-temperature region, i.e., the amount of hydrogen released in a temperature range of from room temperature to 50°C. To significantly improve the trimmed edge quality while the high YR, high $\lambda$, and high bendability are maintained, the inventors have found the following. That is, the inventors have found that it is particularly essential to reduce the amount of low-temperature diffusive hydrogen in the base steel sheet 24 hours after production to 0.015 ppm by mass or less and have thus developed the invention. Therefore, the amount of low-temperature diffusive hydrogen in the base steel sheet 24 hours after production is set to 0.015 ppm by mass or less. The smaller the amount of low-temperature diffusive hydrogen in the base steel sheet 24 hours after production, the better. The amount of low-temperature diffusive hydrogen is preferably 0.010 ppm by mass or less and more preferably 0.006 ppm by mass or less. No particular limitation is imposed on the lower limit of the amount of low-temperature diffusive hydrogen in the base steel sheet 24 hours after production, and the amount of low-temperature diffusive hydrogen may be 0 ppm by mass. However, in view of the limitations on the production technique, the amount of low-temperature diffusive hydrogen in the base steel sheet 24 hours after production is preferably 0.001 ppm by mass or more.

The amount of low-temperature diffusive hydrogen in the base steel sheet 24 hours after production is measured as follows.

Specifically, a large sheet sample with a length of 500 mm is cut from a steel strip produced in a hot-dip galvanizing line. Then, 24 hours after production, a test specimen with a length of 30 mm and a width of 5 mm is sheared from the central position of the large sheet sample. Immediately after the shearing, the test specimen is immersed in liquid nitrogen. Next, the hot-dip galvanized layer on the test specimen is removed with an alkali treatment solution while the temperature of the treatment solution is controlled such that the surface temperature of the test specimen is lower than room temperature. Next, the test specimen is heated, and the amount of hydrogen released from the test specimen is measured by thermal desorption spectrometry. Specifically, the test specimen is heated from room temperature to a heating end-point temperature of 300°C under the condition of a heating rate of 200°C/hr and then cooled to room temperature. In this case, the cumulative amount of hydrogen released from the test specimen in a temperature range of from room temperature to 50°C during heating (this amount is hereinafter referred to also as a cumulative hydrogen release amount) is measured. Then a formula shown below is used to calculate the amount of low-temperature diffusive hydrogen in the base steel sheet. Whether the hot-dip galvanized layer in the test specimen has been fully removed is checked as follows. The test specimen is heated from room temperature, and TDA analysis is performed at 200 to 210°C to check the amount of released hydrogen. When the amount of the released hydrogen becomes zero, the galvanized layer is considered fully removed.

[Amount of low-temperature diffusive hydrogen in base steel sheet (ppm by mass)] = [cumulative hydrogen release amount (g)] / [mass of test specimen (g)] $\times$ $10^6$

The time point 24 hours after production is defined as follows. The time point at which all steps in the hot-dip galvanizing line (from an annealing step to a reheating step in Table 2) are completed and the coiling on the exit side of the continuous annealing line is completed is defined as the starting point. The time point 24 hours after production is the time point 24 hours plus or minus 2 hours from the starting point.

When the room temperature is within the range of from 10 to 25°C, the measurement of the amount of low-temperature diffusive hydrogen in the base steel sheet is not specifically affected. However, when the room temperature is outside the range of from 10 to 25°C, 25°C is used as a representative room temperature, and the cumulative amount of hydrogen released from the test specimen in the temperature range of from 25°C to 50°C may be measured.

For hot-dip galvanized steel sheets (members) subjected to cold working such as punching, blanking, stretch flanging, or bending and members produced by welding the hot-dip galvanized steel sheets (members) subjected to the working, the amount of low-temperature diffusive hydrogen may be measured in the same manner as described above. Moreover, for automotive framework structural parts and reinforcing parts produced using the above members, the amount of low-temperature diffusive hydrogen in a portion corresponding to the base steel sheet may be measured in the same manner as described above.

No particular limitation is imposed on the thickness of the base steel sheet of the hot-dip galvanized steel sheet according to the present embodiment of the invention. The thickness is generally 0.3 mm or more and 2.8 mm or less.

Hot-dip galvanized layer:

Next, the hot-dip galvanized layer in the hot-dip galvanized steel sheet according to the present embodiment of the invention will be described. The term "hot-dip galvanized layer" as used herein is intended to encompass a hot-dip galvannealed layer obtained by subjecting the hot-dip galvannealed layer to galvannealing treatment. The hot-dip galvanized layer is formed on both sides of the base steel sheet.

No particular limitation is imposed on the chemical composition of the hot-dip galvanized layer, and the hot-dip galvanized layer may have any common chemical composition. For example, the hot-dip galvanized layer contains Fe: 20% by mass or less and Al: 0.001% by mass or more and 1.0% by mass or less. The hot-dip galvanized layer further contains one or two or more selected from the group consisting of Pb, Sb, Si, Sn, Mg, Mn, Ni, Cr, Co, Ca, Cu, Li, Ti, Be, Bi, and REMs in a total amount of 0% by mass or more and 3.5% by mass or less. The balance is Zn and incidental impurities. In a non-galvannealed hot-dip galvanized layer, the content of Fe in the galvanized layer is, for example, less than 7% by mass. In a hot-dip galvannealed layer, the content of Fe in the galvannealed layer is, for example, 7% by mass or more and 15% by mass or less and is more preferably 8% by mass or more and 13% by mass or less. However, the invention is not limited thereto.

No particular limitation is imposed on the coating weight per side. The coating weight per side is preferably 20 to 80 g/m$^2$.

In the hot-dip galvanized steel sheet according to the present embodiment of the invention, it is important to appropriately control cracks in the hot-dip galvanized layer and the full width at half maximum of the $\delta 1$ phase.

[Number density of cracks penetrating through hot-dip galvanized layer: 30 cracks/mm or more]

In the present disclosure, this is an extremely important constituent factor of the invention. By increasing the number density of cracks penetrating through the galvanized layer, the amount of low-temperature diffusive hydrogen in the base steel sheet 24 hours after production can be reduced. In this case, the trimmed edge quality can be improved while the high $\lambda$ and bendability are maintained. To obtain this effect, the number density of cracks penetrating through the galvanized layer must be 30 cracks/mm or more. No particular limitation is imposed on the upper limit of the number density of cracks penetrating through the galvanized layer. However, the number density is preferably 100 cracks/mm or less, otherwise the coating quality deteriorates. Therefore, the number density of cracks penetrating through the galvanized layer is set to 30 cracks/mm or more. The number density of cracks penetrating through the galvanized layer is preferably 40 cracks/mm or more. The number density of cracks penetrating through the galvanized layer is preferably 100 cracks/mm or less.

The number density of cracks penetrating through the galvanized layer is measured as follows.

A sample is cut from the hot-dip galvanized steel sheet such that a thicknesswise cross section (L cross section) parallel to the rolling direction of the hot-dip galvanized steel sheet serves as an observation surface. Then the observation surface is mirror-polished using a diamond paste. The hot-dip galvanized layer is used as an observation position, and an SEM is used to observe a region extending 2 mm in the rolling direction at a magnification of 2000X under the condition of an acceleration voltage of 15 kV. In this case, the viewing area is set to have a rolling direction size of 140 $\mu$m and a thickness direction size of 44 $\mu$m. In the microstructure images, the number of cracks penetrating through the hot-dip galvanized layer is counted and divided by 2 mm to calculate the number density of cracks penetrating through the galvanized layer.

[Full width at half maximum of δ1 phase in hot-dip galvanized layer: 0.100 degrees or more]

In the present disclosure, this is an extremely important constituent factor of the invention. By increasing the full width at half maximum of the δ1 phase in the galvanized layer, the amount of low-temperature diffusive hydrogen in the base steel sheet 24 hours after production can be reduced, and therefore the trimmed edge quality can be improved while the high λ and bendability are maintained. To obtain this effect, the full width at half maximum of the δ1 phase in the galvanized layer must be set to 0.100 degrees or more. No particular limitation is imposed on the upper limit of the full width at half maximum of the δ1 phase in the galvanized layer. However, the full width at half maximum is preferably 0.150 degrees or less, otherwise the coating quality may deteriorate. Therefore, the full width at half maximum of the δ1 phase in the galvanized layer is set to 0.100 degrees or more. The full width at half maximum of the δ1 phase in the galvanized layer is preferably 0.110 degrees or more. The full width at half maximum of the δ1 phase in the galvanized layer is preferably 0.150 degrees or less.

The full width at half maximum of the δ1 phase in the galvanized layer is measured as follows.

A sample is cut from the hot-dip galvanized steel sheet such that its surface serves as an observation surface, and the surface is subjected to measurement using a Cu tube in an X-ray diffraction apparatus with a sampling angle step of 0.006° for 0.36 seconds per measurement point. To subtract the full widths at half maximum derived from the X-ray diffraction apparatus and the radiation source themselves, heat-treated Si and heat-treated LaB$_6$ used as strain-free standard samples are subjected to measurement at angle steps of 0.004° and 0.002°. Then the results are used to determine changes in full width at half maximum using a method described in "N.L. Okamoto, K. Tanaka, A. Yasuhara, and H. Inui: Acta Cryst., B70 (2014),275."

No particular limitation is imposed on the thickness of the hot-dip galvanized steel sheet according to the present embodiment of the invention. Generally, the thickness is 0.3 mm or more and 2.8 mm or less.

Method for producing hot-dip galvanized steel sheet

A method for producing the hot-dip galvanized steel sheet according to the present embodiment of the invention will next be described.

First, a steel slab is produced by melting a steel material having the chemical composition described above. In the present disclosure, no particular limitation is imposed on the method for melting the steel material, and any known melting method using a converter, an electric arc furnace, etc. may be suitably used. Preferably, the steel slab (slab) is produced using a continuous casting method in order to prevent macro segregation. However, the steel slab may be produced using another method such as ingot casting or thin slab casting. After the production of the steel slab, a conventional method may be used to cool the steel slab to room temperature and then reheat the steel slab. Alternatively, an energy saving process such as hot charge rolling or hot direct rolling can be used without any problem. In the hot charge rolling or hot direct rolling, the slab is not cooled to room temperature. The hot slab is charged into a heating furnace, or the slab is subjected to heat retention for a short time, and then the resulting slab is immediately hot-rolled.

Next, the produced steel slab is subjected to hot rolling including rough rolling and finish rolling to produce a hot rolled sheet. For example, the steel slab produced as described above is once cooled to room temperature, subjected to slab heating, and then rolled. The slab heating temperature is preferably 1100°C or higher, from the viewpoint of dissolving carbides and reducing the rolling load. To prevent an increase in scale loss, the slab heating temperature is preferably 1300°C or lower. The slab heating temperature is based on the temperature of the surface of the slab during heating.

Subsequently, the steel slab is subjected to rough rolling under ordinary conditions to form a sheet bar. When the slab heating temperature is set to be low, it is preferable that the sheet bar is heated before finish rolling using, for example, a bar heater, from the viewpoint of preventing troubles during rolling. Preferably, the finish rolling temperature is higher than or equal to the Ar$_3$ transformation temperature. When the finish rolling temperature is excessively low, the loading load increases, and the rolling reduction in a state in which austenite is not recrystallized may increase. In this case, an unexpected microstructure extending in the rolling direction may develop, resulting in a reduction in the workability of the annealed steel sheet. The Ar$_3$ transformation temperature is determined by the following formula.

Ar$_3$ (°C) = 868 - 396 × [%C] + 24.6 × [%Si] - 68.1 × [%Mn] - 36.1 × [%Ni] - 20.7 × [%Cu] - 24.8 × [%Cr]

In the above formula, [% element symbol] represents the content (% by mass) of the element in the chemical composition and is 0 when the element is not contained.

During hot rolling, rough-rolled sheets may be joined together to allow finish rolling to be performed continuously. The rough-rolled sheets may be temporarily coiled before the rough-rolled sheets (sheet bar) are subjecting finish rolling. To reduce the rolling load during the hot rolling, part or all of the finish rolling may be performed as lubrication rolling. The lubrication rolling is also effective from the viewpoint of allowing the steel sheet to have a uniform shape and uniform material properties. The coefficient of friction during the lubrication rolling is preferably in the range of 0.10 or more and 0.25 or less.

Subsequently, the hot rolled steel sheet is pickled. The pickling allows removal of oxides from the surface of the steel sheet and is essential for imparting excellent chemical convertibility to the high strength steel sheet used as the final product and for ensuring excellent coating quality. The pickling may be performed once or repeatedly in a plurality of passes.

Subsequently, the hot rolled sheet subjected to pickling or the hot rolled sheet subjected to pickling and then to optional heat treatment (hot rolled annealed sheet) is cold-rolled to obtain a cold rolled steel sheet. Preferably, the cold rolling is performed through multi-pass rolling including two or more passes such as tandem-type multi-stand rolling or reverse rolling because uniform strain can be introduced effectively, and a uniform microstructure can be obtained.

In this case, the cumulative rolling reduction ratio is set to 20% or more and 75% or less. In the present embodiment, this is an extremely important constituent factor of the invention.

[Cumulative rolling reduction ratio in cold rolling: 20% or more and 75% or less]

By increasing the cumulative rolling reduction ratio in the cold rolling, the area fraction of martensite increases, and the area fraction of ferrite decreases, so that a high YR, high λ, and high bendability can be obtained. To obtain this effect, the cumulative rolling reduction ratio in the cold rolling is set to 20% or more. Meanwhile, when the cumulative rolling reduction ratio in the cold rolling exceeds 75%, the grain size of austenite generated during annealing becomes small, and the amount of retained austenite in the annealed sheet increases. As a result, the amount of low-temperature diffusive hydrogen in the base steel sheet 24 hours after production increases, causing deterioration of the λ and bendability and deterioration of the trimmed edge quality. Therefore, the cumulative rolling reduction ratio in the cold rolling is set to 20% or more and 75% or less. The cumulative rolling reduction ratio in the cold rolling is preferably 25% or more. The cumulative rolling reduction ratio in the cold rolling is preferably 70% or less. The cumulative rolling reduction ratio in the cold rolling is more preferably 27% or more. The cumulative rolling reduction ratio in the cold rolling is more preferably 60% or less.

[Sheet traveling speed during final pass in cold rolling: 50 mpm or more (preferred condition)]

By increasing the sheet traveling speed in the final pass of the cold rolling, strain is introduced into the surface layer of the base steel sheet, and the number density of cracks penetrating through the galvanized layer can be increased. This is significantly effective when the steel sheet subjected to hot-dip galvanizing treatment is further subjected to galvannealing treatment. As a result, the amount of low-temperature diffusive hydrogen in the base steel sheet 24 hours after production can be reduced. Therefore, the trimmed edge quality can be improved while the high λ and bendability are maintained. To obtain these effects, the sheet traveling speed in the final pass of the cold rolling is set to 50 mpm or more. No particular limitation is imposed on the upper limit of the sheet traveling speed in the final pass of the cold rolling. However, in view of the limitations on the production technique, the sheet traveling speed is preferably 300 mpm or less. Therefore, the sheet traveling speed in the final pass of the cold rolling is set to 50 mpm or more. The sheet traveling speed in the final pass of the cold rolling is preferably 70 mpm or more. The sheet traveling speed in the final pass of the cold rolling is preferably 300 mpm or less.

The cold rolled steel sheet obtained as described above is subjected to an annealing step. The annealing conditions are as follows.

[Heating temperature: 780°C or higher]

When the heating temperature (annealing temperature) is lower than 780°C, the annealing treatment proceeds in the ferrite-austenite two phase region, and the resulting steel sheet contains a large amount of ferrite after annealing. This makes it difficult to achieve the desired YR. No particular limitation is imposed on the upper limit of the heating temperature. However, when the heating temperature is high, the thickness of the softened surface layer after annealing increases, and the TS decreases. Moreover, the grain size of prior austenite increases, and the YR decreases. Therefore, the heating temperature is preferably 1000°C or lower. Specifically, the heating temperature is set to 780°C or higher. The heating temperature is preferably 820°C or higher. The heating temperature is preferably 1000°C or lower. The heating temperature is more preferably 830°C or higher. The heating temperature is more preferably 980°C or lower. The heating temperature is measured based on the temperature of the surface of the steel sheet. No particular limitation is imposed on the heat retention time at the heating temperature. However, the heat retention time is preferably 10 seconds or longer and 600 seconds or shorter.

After the annealing but before the hot-dip galvanizing treatment, the cold rolled steel sheet is cooled. No particular limitation is imposed on the cooling conditions, and a conventional procedure may be used. For example, no particular limitation is imposed on the average cooling rate in the temperature range of the heating temperature or lower and 500°C or higher. However, from the viewpoint of controlling the area fractions of martensite and ferrite, the average cooling rate is preferably 5°C/s or more and 50°C/s or less.

[Coating treatment step]

Then the cold rolled steel sheet is subjected to a coating treatment step to prepare a coated steel sheet. Examples of the coating treatment include hot-dip galvanizing treatment. After the hot-dip galvanizing treatment, galvannealing treatment may be performed. Furthermore, the annealing, cooling, and coating treatment may be performed continuously in a single line (CGL (Continuous Galvanizing Line)). For example, after the annealing, the cold rolled steel sheet is cooled to a temperature range of about 500°C. Subsequently, the cold rolled steel sheet is transferred to a steel strip exit side of a cooling zone and is further cooled while being moved to a hot-dip galvanizing bath through a snout having a forward end immersed in the hot-dip galvanizing bath. No particular limitation is imposed on the time from the end of cooling of the cold rolled steel sheet until the cold-rolled steel sheet enters the hot-dip galvanizing bath. From the viewpoint of controlling the area fractions of martensite and ferrite, the above time is preferably 1 second or longer and 300 seconds or shorter. A roll for changing the traveling direction of the cold rolled steel sheet to allow the cold rolled steel sheet to enter the snout is provided immediately upstream of a connection portion between the cooling zone and the snout, and the cold rolled steel sheet passes the roll and then enters the snout. The cold rolled steel sheet guided to the hot-dip galvanizing bath through the snout is immersed in the hot-dip galvanizing bath and subjected to hot-dip galvanizing treatment to thereby obtain a galvanized steel sheet.

In the hot-dip galvanizing treatment, the cold rolled steel sheet is, for example, immersed in the hot-dip galvanizing bath at 440°C or higher and 500°C or lower. Preferably, the hot-dip galvanizing bath used has a chemical composition with an Al content of 0.10% by mass or more and 0.23% by mass or less with the balance being Zn and incidental impurities.

After the hot-dip galvanizing treatment described above, galvannealing treatment may be performed in a temperature range of 460°C or higher and 600°C or lower. When the galvannealing temperature is lower than 460°C, the Zn-Fe alloying speed is excessively low, and the productivity deteriorates. When the galvannealing temperature exceeds 600°C, untransformed austenite transforms to pearlite, and the desired area fraction of martensite may not be obtained. Therefore, the galvannealing temperature is preferably 460°C or higher and 600°C or lower. The galvannealing temperature is preferably 470°C or higher. The galvannealing temperature is preferably 560°C or lower.

The coating weight per side is preferably 20 to 80 g/m$^2$ (double-sided coating). The coating weight can be adjusted by performing, for example, gas wiping after the hot-dip galvanizing treatment.

[Optional cooling step]

After the annealing step, the coated steel sheet is optionally cooled (cooling step). No particular limitation is imposed on the average cooling rate in the range of lower than 500°C to higher than 400°C. However, the cooling rate is preferably 5°C/s or more and 30°C/s or lower. In the temperature range of the heating temperature or lower and higher than 400°C, the high strength steel sheet may be cooled once, and then the temperature of the steel sheet may be again increased.

[Average cooling rate in temperature range of 250°C or higher and 400°C or lower: 1.0°C/s or more (cooling step)]

By increasing the average cooling rate in the temperature range of 250°C or higher and 400°C or lower, the area fraction of ferrite can be reduced, and the area fraction of martensite can be increased. Since the base steel sheet undergoes martensite transformation after the solidification of the hot-dip galvanized layer, the number density of cracks penetrating through the galvanized layer can be increased. Therefore, the amount of low-temperature diffusive hydrogen in the base steel sheet 24 hours after production can be reduced, so that the trimmed edge quality can be improved while the high $\lambda$ and bendability are maintained. To obtain these effects, the average cooling rate in the temperature range of 250°C or higher and 400°C or lower is set to 1.0°C/s or more. The average cooling rate in the temperature range of 250°C or higher and 400°C or lower is preferably 2.0°C/s or more, more preferably 3.0°C/s or more, and still more preferably 4.0°C/s or more. No particular limitation is imposed on the upper limit of the average cooling rate in the temperature range of 250°C or higher and 400°C or lower. However, in view of the limitations on the production technique, the average cooling rate is preferably 100.0°C/s or lower and more preferably 80.0°C/s or lower. When the cooling stop temperature exceeds 250°C, the average cooling rate is the value in the temperature range of the cooling stop temperature or higher and 400°C or lower. The average cooling rate is measured based on the surface temperature of the steel sheet.

A cooling method used in the temperature range of 250°C or higher and 400°C or lower may be gas jet cooling, mist cooling, water cooling, air cooling, and the same.

[Uniaxial tensile strain in surface layer: 0.1% or more]

By subjecting the annealed and cooled hot-dip galvanized steel sheet to working such that the surface layer is subjected to a uniaxial tensile strain more than or equal to a predetermined value, the number density of cracks penetrating through the galvanized layer can be increased, and the full width at half maximum of the $\delta 1$ phase in the galvanized layer can be increased. As a result, the amount of low-temperature diffusive hydrogen in the base steel sheet 24 hours after production can be reduced, so that the trimmed edge quality can be improved while the high $\lambda$ and bendability are maintained. To obtain this effect, the uniaxial tensile strain in the surface layer must be 0.1% or more. The uniaxial tensile strain in the surface layer is preferably 0.5% or more and more preferably 1.0% or more. No particular limitation is imposed on the upper limit of the uniaxial tensile strain in the surface layer. However, in view of the limitations on the production technique, the uniaxial tensile strain in the surface layer is preferably 10.0% or less. The uniaxial tensile strain in the surface layer is more preferably 7.5% or less.

The surface layer means the galvanized layer of the hot-dip galvanized steel sheet, and the uniaxial tensile strain in the surface layer is calculated as follows. Markers are provided on the surface of the annealed and cooled hot-dip galvanized steel sheet so as to be arranged in the sheet traveling direction, and the displacement of the markers in the sheet traveling direction after the application of strain is used to calculate the uniaxial tensile strain. The strain application method described above is temper rolling or a working method including repeated bending using a tension leveler or rolls.

[Heat retention temperature in cooling step: 100°C or higher and 450°C or lower (preferred condition)]

Preferably, in the cooling step, heat retention is performed in the temperature range of 100°C or higher and 450°C or lower for 5 seconds or longer. By subjecting the hot-dip galvanized steel sheet to the heat retention in the above range to further reduce the area fraction of bainitic ferrite, the YR, $\lambda$, and bendability can be adjusted within more preferred ranges. The heat retention temperature in the cooling step is more preferably 150°C or higher and still more preferably 200°C or higher. The heat retention temperature in the cooling step is more preferably 400°C or lower and still more preferably 350°C or lower. The temperature in the cooling step is based on the surface temperature of the steel sheet. After the heat retention at this temperature, cooling is performed, and then strain is imparted such that the uniaxial tensile strain in the surface layer is 0.1% or more. No particular limitation is imposed on the cooling conditions after the heat retention treatment, and a conventional procedure may be used.

[Heat retention time in cooling step: 5 seconds or longer (preferred condition)]

By performing the heat retention at the above-described heat retention temperature in the cooling step, the YR, $\lambda$, and bendability can be adjusted within more preferred ranges. To obtain this effect, the heat retention time at the heat retention temperature in the cooling step is preferably 5 seconds or longer, more preferably 10 seconds or longer, and still more preferably 15 seconds or longer. No particular limitation is imposed on the upper limit of the heat retention time at the heat retention temperature in the cooling step. To adjust the TS within a more preferred range, the heat retention time at the heat retention temperature in the cooling step is preferably 500 seconds or shorter and more preferably 250 seconds or shorter.

[Cooling stop temperature: 250°C or lower (preferred condition)]

In the cooling step described above, the cooling stop temperature is preferably 250°C or lower and more preferably 200°C or lower. When the cooling stop temperature is 250°C or lower, the formation of a large amount of retained austenite after annealing can be prevented, and the YR, $\lambda$, and bendability can be further improved. No particular limitation is imposed on the lower limit of the cooling stop temperature. However, from the viewpoint of productivity, the cooling stop temperature is preferably higher than or equal to room temperature. The cooling stop temperature is measured based on the surface temperature of the steel sheet.

No particular limitation is imposed on the average cooling rate in the range of from 250°C or lower to the cooling stop temperature. However, to further improve the YR, the average cooling rate in the range of from 250°C or lower to the cooling stop temperature is preferably 1°C/s or more and more preferably 2°C/s or more. In view of the limitations on the production technique, the average cooling rate in the range of from 250°C or lower to the cooling stop temperature is preferably 1000°C/s or lower and more preferably 150°C/s or lower.

The cold rolled steel sheet may be cooled from the cooling stop temperature to room temperature. No particular limitation is imposed on the average cooling rate from the cooling stop temperature to room temperature, and any method may be used to cool the cold rolled sheet to room temperature. Examples of the cooling method that can be used include gas jet cooling, mist cooling, water cooling, and air cooling.

The hot-dip galvanized steel sheet subjected to the annealing described above and cooled to the cooling stop temperature may be rolled. The elongation ratio in the rolling is preferably 0.05% or more and more preferably 0.10% or more. By setting the elongation ratio in the rolling performed after the cooling to the cooling stop temperature to 0.05% or more, the YR can be controlled within the desired range. The elongation ratio in the rolling is preferably 2.00% or less and more preferably 1.00% or less. By setting the elongation ratio in the rolling after the cooling to the cooling stop temperature to 2.00% or less, the volume fraction of retained austenite can be adjusted within a more preferred range, and the bendability and the degree of damage to sheared end faces in a corrosive environment can be adjusted within more preferred ranges.

The rolling performed after cooling to the cooling stop temperature may be performed in an apparatus connected to the continuous annealing apparatus described above (on-line) or may be performed in an apparatus separated from the continuous annealing apparatus (off-line). The target elongation ratio may be achieved by a single rolling pass, or a plurality of rolling passes may be performed to obtain a total elongation ratio of 0.05% or more and 2.00% or less. The rolling described above is generally temper rolling. However, any working method such as repeated bending using a tension leveler, or rolls may be used so long as an elongation ratio comparable to that obtained by temper rolling can be obtained.

[Reheating step]

[Reheating temperature: (cooling stop temperature + 50°C) or higher and 450°C or lower (preferred condition)]

After the cooling to the cooling stop temperature or after the rolling performed after the cooling to the cooling stop temperature, the hot-dip galvanized steel sheet may be reheated (reheating step). By reheating the hot-dip galvanized steel sheet, the YR and bendability can be adjusted within more preferred ranges. To obtain this effect, the reheating temperature is preferably (the cooling stop temperature + 50°C) or higher, more preferably (the cooling stop temperature + 100°C) or higher, and still more preferably (the cooling stop temperature + 150°C) or higher. As the reheating temperature increases, martensite is further tempered, and the TS decreases. Therefore, the reheating temperature is preferably 450°C or lower, more preferably 400°C or lower, and still more preferably 380°C or lower. The reheating temperature is based on the surface temperature of the steel sheet. After the reheating and the heat retention at this temperature, cooling is performed. The reheating may be performed after the strain is imparted such that the uniaxial tensile strain in the surface layer is 0.1% or more or may be performed before the strain is imparted. No particular limitation is imposed on the cooling conditions after the reheating and the heat retention, and a conventional procedure may be used.

[Heat retention time at reheating temperature: 5 seconds or longer (preferred condition)]

By performing heat retention at the reheating temperature, the YR and bendability can be adjusted within more preferred ranges. To obtain this effect, the heat retention time at the reheating temperature is preferably 5 seconds or longer, more preferably 10 seconds or longer, and still more preferably 15 seconds or longer. No particular limitation is imposed on the upper limit of the heat retention time at the reheating temperature. However, to adjust the TS within a more preferred range, the heat retention time at the reheating temperature is preferably 500 seconds or shorter and more preferably 250 seconds or shorter. No particular limitation is imposed on the cooling rate from the reheating temperature to room temperature, and any method may be used for the cooling to room temperature. Examples of the cooling method that can be used include gas jet cooling, mist cooling, water cooling, and air cooling.

When the hot-dip galvanized steel sheet is used as a trade product, the hot-dip galvanized steel sheet is generally cooled and then used as the trade product. Production conditions other than the conditions described above may be set according to a conventional procedure.

Member:

A member according to an embodiment of the invention will be described.

The member according to the present embodiment of the invention is a member prepared using the hot-dip galvanized steel sheet according to the preceding embodiment of the invention. The member according to the present embodiment of the invention is prepared, for example, by forming the hot-dip galvanized steel sheet according to the preceding embodiment of the invention into an intended shape by, for example, cold pressing. Therefore, the member has the steel microstructure of the hot-dip galvanized steel sheet and the properties of the hot-dip galvanized layer even after forming. The amount of low-temperature diffusive hydrogen in the member is the same as that in the hot-dip galvanized layer. The member according to the present embodiment of the invention is preferably used for framework structural parts of automobiles and reinforcing parts of automobiles. In some embodiments, these consist of the member of the invention.

The above-described hot-dip galvanized steel sheet according to the preceding embodiment of the invention is a hot-dip galvanized steel sheet developed so as to have a high YR, exhibit high stretch flangeability and high bendability, and provide improved trimmed edge quality. Therefore, the member according to the present embodiment of the invention can contribute to a reduction in vehicle body weight and can be particularly preferably used for framework structural parts of automobiles or variety of members for reinforcing parts of automobiles.

EXAMPLES

Steel slabs (steel materials) having chemical compositions shown in Table 1 with the balance being Fe and incidental impurities were produced using a converter and then subjected to continuous casting to obtain steel slabs. One of the obtained steel slabs was heated to 1250°C and then subjected to rough rolling to obtain a sheet bar. The obtained sheet bar was subjected to finish rolling at a finish rolling temperature of 900°C, coiled at a coiling temperature of 500°C, and then cooled to obtain a hot rolled steel sheet. The obtained hot rolled steel sheet was pickled and cold-rolled under conditions shown in Table 2 to obtain a cold rolled steel sheet with a thickness of 1.4 mm.

Subsequently, the obtained cold rolled steel sheet was annealed under conditions shown in Table 2. Then the cold rolled steel sheet was subjected to coating treatment of one of the types shown in Table 2 to obtain a galvanized steel sheet having a hot-dip galvanized layer on both sides. In the coating type column in Table 2, GI means that only hot-dip galvanizing treatment was performed (a hot-dip galvanized steel sheet without galvannealing), and GA means that hot-dip galvanizing treatment was performed, followed by galvannealing (hot-dip galvannealed steel sheet).

[Table 1]

Chemical composition (% by mass)

| Steel type | C | Si | Mn | P | S | Al | N | O | Ti | Nb | V | Ta | W | B | Cr | Mo | Ni | Co | Cu | Sn | Sb | Ca | Mg | REM | Zr | Te | Hf | Bi | Remarks |
|---|---|---|---|---|---|---|---|---|---|---|---|---|---|---|---|---|---|---|---|---|---|---|---|---|---|---|---|---|---|
| A | 0.2-11 | 0.5-2 | 2.6-0 | 0.0-44 | 0.00-15 | 0.0-50 | 0.00-28 | 0.00-05 | - | - | - | - | - | - | - | - | - | - | - | - | - | - | - | - | - | - | - | - | Suitable steel |
| B | 0.2-86 | 0.8-0 | 2.5-2 | 0.0-29 | 0.00-07 | 0.0-21 | 0.00-34 | 0.00-10 | - | - | - | - | - | - | - | - | - | - | - | - | - | - | - | - | - | - | - | - | Suitable steel |
| C | 0.1-20 | 0.6-5 | 2.5-3 | 0.0-30 | 0.00-37 | 0.0-43 | 0.00-45 | 0.00-10 | - | - | - | - | - | - | - | - | - | - | - | - | - | - | - | - | - | - | - | - | Suitable steel |
| D | 0.3-43 | 0.8-0 | 3.0-8 | 0.0-40 | 0.00-20 | 0.0-41 | 0.00-46 | 0.00-06 | - | - | - | - | - | - | - | - | - | - | - | - | - | - | - | - | - | - | - | - | Suitable steel |
| E | 0.0-84 | 0.6-7 | 2.8-2 | 0.0-07 | 0.00-36 | 0.0-47 | 0.00-37 | 0.00-06 | - | - | - | - | - | - | - | - | - | - | - | - | - | - | - | - | - | - | - | - | Suitable steel |
| F | 0.0-25 | 0.4-9 | 2.5-9 | 0.0-37 | 0.00-45 | 0.0-45 | 0.00-30 | 0.00-10 | - | - | - | - | - | - | - | - | - | - | - | - | - | - | - | - | - | - | - | - | Comparative steel |
| G | 0.0-83 | 2.6-8 | 3.0-6 | 0.0-21 | 0.00-19 | 0.0-34 | 0.00-49 | 0.00-07 | - | - | - | - | - | - | - | - | - | - | - | - | - | - | - | - | - | - | - | - | Comparative steel |
| H | 0.0-88 | 0.5-6 | 0.0-7 | 0.0-33 | 0.00-48 | 0.0-38 | 0.00-50 | 0.00-13 | - | - | - | - | - | - | - | - | - | - | - | - | - | - | - | - | - | - | - | - | Comparative steel |
| I | 0.0-99 | 0.5-0 | 5.1-4 | 0.0-28 | 0.00-33 | 0.0-42 | 0.00-48 | 0.00-08 | - | - | - | - | - | - | - | - | - | - | - | - | - | - | - | - | - | - | - | - | Comparative steel |
| J | 0.1-69 | 0.3-4 | 3.0-1 | 0.0-24 | 0.00-38 | 0.0-34 | 0.00-38 | 0.00-13 | 0.0-49 | - | - | - | - | - | - | - | - | - | - | - | - | - | - | - | - | - | - | - | Suitable steel |
| K | 0.2-18 | 0.5-2 | 2.8-5 | 0.0-41 | 0.00-41 | 0.0-25 | 0.00-49 | 0.00-07 | - | 0.0-13 | - | - | - | - | - | - | - | - | - | - | - | - | - | - | - | - | - | - | Suitable steel |
| L | 0.1-42 | 0.5-9 | 2.6-2 | 0.0-30 | 0.00-24 | 0.0-37 | 0.00-46 | 0.00-09 | - | - | 0.0-12 | - | - | - | - | - | - | - | - | - | - | - | - | - | - | - | - | - | Suitable steel |
| M | 0.2-76 | 0.7-1 | 3.0-0 | 0.0-07 | 0.00-23 | 0.0-46 | 0.00-50 | 0.00-03 | - | - | - | 0.0-16 | 0.0-9 | - | - | - | - | - | - | - | - | - | - | - | - | - | - | - | Suitable steel |
| N | 0.1-70 | 0.6-0 | 2.8-2 | 0.0-48 | 0.00-18 | 0.0-26 | 0.00-49 | 0.00-10 | - | 0.0-16 | - | 0.0-37 | - | - | - | - | - | - | - | - | - | - | - | - | - | - | - | - | Suitable steel |
| O | 0.1-76 | 0.5-1 | 2.9-8 | 0.0-46 | 0.00-22 | 0.0-43 | 0.00-33 | 0.00-11 | - | - | - | - | - | 0.00-31 | - | - | - | - | - | - | - | - | - | - | - | - | - | - | Suitable steel |

(continued)

| Ste-el type | Chemical composition (% by mass) | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|
| | C | Si | Mn | P | S | Al | N | O | Ti | Nb | V | Ta | W | B | Cr | Mo | Ni | Co | Cu | Sn | Sb | Ca | Mg | REM | Zr | Te | Hf | Bi | |
| P | 0.3-14 | 0.6-1 | 2.7-1 | 0.0-29 | 0.00-03 | 0.0-22 | 0.00-29 | 0.00-07 | - | - | - | - | - | - | 0.3-0 | - | - | - | - | - | - | - | - | - | - | - | - | - | Suitable steel |
| Q | 0.2-81 | 0.5-4 | 3.0-6 | 0.0-24 | 0.00-46 | 0.0-25 | 0.00-29 | 0.00-07 | - | - | - | - | - | - | - | 0.0-8 | - | - | - | - | - | - | - | - | - | - | - | - | Suitable steel |
| R | 0.2-19 | 0.1-1 | 2.6-5 | 0.0-16 | 0.00-11 | 0.0-20 | 0.00-28 | 0.00-13 | - | - | - | - | - | - | - | - | 0.1-6 | - | - | - | - | - | - | - | - | - | - | - | Suitable steel |
| S | 0.2-05 | 0.4-5 | 2.5-3 | 0.0-45 | 0.00-44 | 0.0-29 | 0.00-33 | 0.00-05 | - | - | - | - | - | - | - | - | - | 0.0-07 | - | - | - | - | - | - | - | - | - | - | Suitable steel |
| T | 0.1-82 | 1.5-9 | 2.9-5 | 0.0-10 | 0.00-06 | 0.0-35 | 0.00-38 | 0.00-11 | - | - | - | - | - | - | - | - | - | - | 0.1-3 | - | - | - | - | - | - | - | - | - | Suitable steel |
| U | 0.1-75 | 0.5-9 | 1.9-2 | 0.0-29 | 0.00-17 | 0.0-42 | 0.00-43 | 0.00-13 | - | - | - | - | - | - | - | - | - | - | - | 0.0-26 | - | - | - | - | - | - | - | - | Suitable steel |
| V | 0.1-84 | 0.3-4 | 3.2-8 | 0.0-11 | 0.00-14 | 0.0-36 | 0.00-26 | 0.00-11 | - | - | - | - | - | - | - | - | - | - | - | - | 0.0-19 | 0.00-08 | - | - | - | - | - | - | Suitable steel |
| W | 0.1-98 | 0.9-2 | 2.5-4 | 0.0-08 | 0.00-24 | 0.0-47 | 0.00-34 | 0.00-08 | - | - | - | - | - | - | - | - | - | - | - | - | - | - | 0.00-04 | 0.00-12 | 0.0-50 | - | - | - | Suitable steel |
| X | 0.2-35 | 0.3-0 | 2.7-3 | 0.0-50 | 0.00-16 | 0.0-26 | 0.00-34 | 0.00-11 | - | - | - | - | - | - | - | - | - | - | - | - | - | - | - | - | - | 0.0-04 | 0.0-5 | 0.0-09 | Suitable steel |

Underline: Outside the corresponding range.

[Table 2]

| No. | Steel type | Cold rolling step | | Annealing step | Cooling step | | | | Strain imparting step | Reheating step | | Coating treatment condition | Remarks |
| | | Cumulative rolling reduction ratio (%) | Sheet traveling speed in final pass (mpm) | Heating temperature (°C) | Average cooling rate from 250 to 400°C (°C/s) | Heat retention temperature (°C) | Heat retention time (s) | Cooling stop temperature (°C) | Uniaxial tensile strain in surface layer (%) | Reheating temperature (°C) | Heat retention time at reheating temperature (s) | Type | |
|---|---|---|---|---|---|---|---|---|---|---|---|---|---|
| 1 | A | 50 | 130 | 950 | 14.7 | - | - | 50 | 3.0 | 350 | 50 | GA | Inventive Example |
| 2 | A | 50 | 130 | 950 | 14.7 | 300 | 70 | - | 3.0 | - | - | GA | Inventive Example |
| 3 | A | 50 | 130 | 950 | 14.7 | 150 | 120 | - | 3.0 | - | - | GA | Inventive Example |
| 4 | B | 40 | 80 | 850 | 9.8 | - | - | 80 | 4.0 | 250 | 100 | GA | Inventive Example |
| 5 | C | 45 | 100 | 890 | 5.0 | - | - | Room temperature | 5.0 | 300 | 60 | GA | Inventive Example |
| 6 | C | 45 | 100 | 890 | 5.0 | 350 | 60 | - | 5.0 | - | - | GA | Inventive Example |
| 7 | C | 45 | 100 | 890 | 5.0 | 200 | 100 | - | 5.0 | - | - | GA | Inventive Example |
| 8 | D | 55 | 180 | 850 | 9.8 | - | - | Room temperature | 2.0 | 300 | 60 | GA | Inventive Example |
| 9 | E | 65 | 250 | 800 | 5.0 | - | - | Room temperature | 7.0 | 300 | 60 | GA | Inventive Example |
| 10 | E | 10 | 250 | 800 | 5.0 | - | - | Room temperature | 7.0 | 300 | 60 | GA | Comparative Example |
| 11 | E | 85 | 250 | 800 | 5.0 | - | - | Room temperature | 7.0 | 300 | 60 | GA | Comparative Example |
| 12 | E | 65 | 30 | 800 | 5.0 | - | - | Room temperature | 7.0 | 300 | 60 | GA | Inventive Example |

(continued)

| No. | Steel type | Cold rolling step | | Annealing step | Cooling step | | | | Strain imparting step | Reheating step | | Coating treatment condition | Remarks |
|---|---|---|---|---|---|---|---|---|---|---|---|---|---|
| | | Cumulative rolling reduction ratio (%) | Sheet traveling speed in final pass (mpm) | Heating temperature (°C) | Average cooling rate from 250 to 400°C (°C/s) | Heat retention temperature (°C) | Heat retention time (s) | Cooling stop temperature (°C) | Uniaxial tensile strain in surface layer (%) | Reheating temperature (°C) | Heat retention time at reheating temperature (s) | Type | |
| 13 | E | 65 | 250 | 750 | 5.0 | - | - | Room temperature | 7.0 | 300 | 60 | GA | Comparative Example |
| 14 | E | 65 | 250 | 800 | 0.5 | - | - | Room temperature | 7.0 | 300 | 60 | GA | Comparative Example |
| 15 | E | 65 | 250 | 800 | 5.0 | - | - | Room temperature | 0.04 | 300 | 60 | GA | Comparative Example |
| 16 | F | 55 | 200 | 820 | 3.0 | - | - | 50 | 1.0 | 200 | 90 | GA | Comparative Example |
| 17 | G | 55 | 200 | 820 | 3.0 | - | - | 50 | 1.0 | 200 | 90 | GA | Comparative Example |
| 18 | H | 55 | 200 | 820 | 3.0 | - | - | 50 | 1.0 | 200 | 90 | GA | Comparative Example |
| 19 | I | 55 | 200 | 820 | 3.0 | - | - | 50 | 1.0 | 200 | 90 | GA | Comparative Example |
| 20 | J | 50 | 170 | 850 | 10.1 | - | - | 50 | 5.0 | 250 | 50 | GA | Inventive Example |
| 21 | K | 50 | 170 | 825 | 15.1 | - | - | Room temperature | 5.0 | 300 | 100 | GA | Inventive Example |
| 22 | L | 50 | 170 | 830 | 10.3 | - | - | 80 | 6.0 | 250 | 100 | GA | Inventive Example |
| 23 | M | 50 | 170 | 840 | 29.8 | - | - | Room temperature | 2.0 | 250 | 100 | GA | Inventive Example |
| 24 | N | 50 | 170 | 850 | 14.5 | - | - | 80 | 4.0 | 300 | 50 | GA | Inventive Example |

| No. | Steel type | Cold rolling step | | Annealing step | Cooling step | | | | Strain imparting step | Reheating step | | Coating treatment condition | Remarks |
|---|---|---|---|---|---|---|---|---|---|---|---|---|---|
| | | Cumulative rolling reduction ratio (%) | Sheet traveling speed in final pass (mpm) | Heating temperature (°C) | Average cooling rate from 250 to 400°C (°C/s) | Heat retention temperature (°C) | Heat retention time (s) | Cooling stop temperature (°C) | Uniaxial tensile strain in surface layer (%) | Reheating temperature (°C) | Heat retention time at reheating temperature (s) | Type | |
| 25 | O | 20 | 50 | 830 | 15.2 | - | - | 100 | 4.0 | 300 | 100 | GA | Inventive Example |
| 26 | P | 70 | 300 | 870 | 30.3 | - | - | 50 | 5.0 | 250 | 100 | GA | Inventive Example |
| 27 | Q | 25 | 70 | 990 | 9.9 | - | - | 50 | 3.0 | 250 | 100 | GA | Inventive Example |
| 28 | R | 55 | 200 | 900 | 7.9 | - | - | 50 | 5.0 | 350 | 30 | GI | Inventive Example |
| 29 | S | 55 | 200 | 780 | 8.4 | - | - | 50 | 5.0 | 250 | 100 | GA | Inventive Example |
| 30 | T | 50 | 150 | 850 | 2.1 | - | - | 150 | 5.0 | 250 | 100 | GA | Inventive Example |
| 31 | U | 55 | 220 | 920 | 50.1 | - | - | 50 | 5.0 | 450 | 100 | GA | Inventive Example |
| 32 | V | 55 | 220 | 880 | 15.1 | - | - | 50 | 0.2 | 450 | 5 | GA | Inventive Example |
| 33 | W | 55 | 220 | 880 | 15.1 | - | - | 50 | 8.0 | 450 | 5 | GA | Inventive Example |
| 34 | X | 55 | 220 | 850 | 10.3 | - | - | 50 | 4.0 | 250 | 100 | GI | Inventive Example |

Underline: Outside the corresponding range.

For each GI, the coating bath used was a hot-dip galvanizing bath containing Al: 0.20% by mass with the balance being Zn and incidental impurities. For each GA, the coating bath used was a hot-dip galvanizing bath containing Al: 0.14% by mass with the balance being Zn and incidental impurities. The temperature of each of the coating baths was 470°C. The coating weight per side for each GI was about 45 to 72 g/m$^2$ (double-sided coating), and the coating weight per side for each GA was about 45 g/m$^2$ (double-sided coating). For each GA, the galvannealing temperature was set to about 550°C.

In each GI, the chemical composition of the hot-dip galvanized layer was Fe: 0.1 to 1.0% by mass and Al: 0.2 to 1.0% by mass with the balance being Zn and incidental impurities. In each GA, the chemical composition of the hot-dip galvannealed layer was Fe: 7 to 15% by mass and Al: 0.1 to 1.0% by mass with the balance being Zn and incidental impurities.

Then the obtained hot-dip galvanized steel sheets were cooled and reheated under conditions shown in Table 2. For conditions not specified, a conventional procedure was applied.

For each of the thus-obtained steel sheets, the microstructures were identified at a position 1/4 of the thickness of the base steel sheet using the method described above. Moreover, the amount of low-temperature diffusive hydrogen in the base steel sheet 24 hours after production, the number density of cracks penetrating through the galvanized layer, and the full width at half maximum of the $\delta$1 phase in the galvanized layer were measured. The results are shown in Table 3. The chemical composition of the base steel sheet of each steel sheet was substantially the same as the chemical composition of the corresponding steel slab. The chemical composition of each suitable steel was within the ranges in the embodiment described above, and the chemical composition of each comparative steel was outside the ranges in the embodiment described above.

For each of the obtained steel sheets, the tensile properties, the stretch flangeability immediately after production, the bendability immediately after production, and the trimmed edge quality were evaluated according to the following test methods. The results are also shown in Table 3. In the Examples, the phrase "immediately after production" means the time point 24 hours after production.

[Tensile test]

The tensile test was performed according to JIS Z 2241:2022. A JIS No. 5 test specimen was cut from one of the obtained steel sheets such that the test specimen was orthogonal to the rolling direction of the steel sheet. The tensile test was performed under the condition of a crosshead speed of $1.67 \times 10^{-1}$ mm/s to measure the YS and TS. In the present invention, when the yield ratio (YR) was 55% or more, the part strength was considered high. The YR was calculated using the calculation method described in formula (1) above.

[Hole expansion test]

A hole expansion test was performed according to JIS Z 2256. One of the obtained steel sheets was sheared into a size of 100 mm $\times$ 100 mm 24 hours after production, and a hole with a diameter of 10 mm was punched in the sheared steel sheet with a clearance of 12.5%. Then the steel sheet was held by a die with an inner diameter of 75 mm at a blank holding force of 9 ton (88.26 kN). While this state was maintained, a conical punch having a vertex angle of 60° was pressed into the hole, and the diameter of the hole at the crack initiation limit was measured. Then the limiting hole expansion ratio $\lambda$ (%) was determined from the following formula.

Limiting hole expansion ratio: $\lambda(\%) = \{(D_f - D_0) / D_0\} \times 100$

Here, $D_f$ is the hole diameter (mm) at the time of occurrence of cracking, and $D_0$ is the initial hole diameter (mm). When the limiting hole expansion ratio $\lambda$ was 30% or more, the stretch flangeability immediately after production was considered excellent.

[Bending test]

The bending test was performed according to JIS Z 2248:2022. A strip-shaped test specimen having a width of 30 mm and a length of 100 mm was cut from one of the obtained steel sheets 24 hours after production such that a direction parallel to the rolling direction of the steel sheet was aligned with the axial direction of the bending test. Then a 90° V-bending test was performed under the conditions of a pressing load of 100 kN and a press-holding time of 5 seconds. In the present disclosure, the bending test was performed on five samples, with the bending radius (R) set such that the value of R/t obtained by dividing the bending radius (R) by the sheet thickness (t) was about 4.5, i.e., 4.3 to 4.7. Next, for all the five samples, the length of a crack on a ridge portion at the apex of the bend was evaluated. When the crack length was 200 $\mu$m or less, the bendability immediately after production was considered excellent. The crack length was evaluated by performing the measurement on the ridge portion at the apex of the bend using a digital microscope (RH-2000 manufactured by HIROX CO., LTD.) at a magnification of 40 to 160X.

[Trimmed edge quality]

Regarding the trimmed edge quality, an edge of a coil was trimmed on the exit side of the CGL such that the actual clearance was 15 to 20%, and the coil with the trimmed edge was cut such that the trimmed edge included in an observation surface extended in the vertical direction. Subsequently, a diamond paste was used to mirror-polish the observation surface. An SEM was used to observe the trimmed edge as an observation position under the condition of an acceleration voltage of 15 kV at a magnification of 30X such that the entire trimmed edge was observable. When no cracking was found in the obtained image, the trimmed edge quality was considered excellent. The cracking means a crack with a length of 100 $\mu$m or longer.

The area fraction of martensite, the area fraction of ferrite, the volume fraction of retained austenite, the amount of low-temperature diffusive hydrogen in the base steel sheet 24 hours after production, the number density of cracks penetrating through the galvanized layer, and the full width at half maximum of the $\delta 1$ phase in the galvanized layer were determined by the methods described above. As for the remaining microstructures, observation was performed using the following method. A sample was cut from one of the steel sheets such that a thicknesswise cross section (L cross section) parallel to the rolling direction of the steel sheet served as the observation surface, and the observation surface was mirror-polished using a diamond paste. Then the resulting observation surface was etched with 3 vol.% nital to make the microstructure visible. A position 1/4 of the thickness of the steel sheet was used as an observation position, and an SEM was used to observe three viewing fields each having a viewing area of 17 $\mu$m $\times$ 23 $\mu$m at a magnification of 5000X under the condition of an acceleration voltage of 15 kV. Carbides in the obtained microstructure images were identified as remaining microstructures.

As shown in Table 3, in Inventive Examples, the YR, $\lambda$, bendability, and trimmed edge quality were excellent. In Comparative Examples, at least one of the YR, $\lambda$, bendability, and trimmed edge quality was poor.

[Table 3]

| No. | Steel type | Area fraction of M (%) | Area fraction of a (%) | Volume fraction of retained $\gamma$ (%) | Remaining microstructure | Amount of low-temperature diffusive hydrogen in base steel sheet 24 hours after production (mass ppm) | Number density of cracks penetrating through hot-dip galvanized layer (cracks/mm) | Full width at half maximum of $\delta 1$ phase in hot-dip galvanized layer (degrees) | YS (MPa) | TS (MPa) | YR (%) | $\lambda$ immediately after production (%) | Bendability immediately after production ($\mu$m) | Quality of trimmed edge | Remarks |
|---|---|---|---|---|---|---|---|---|---|---|---|---|---|---|---|
| 1 | A | 90 | 5 | 2.3 | θ | 0.007 | 68 | 0.119 | 1351 | 1589 | 85 | 41 | 127 | Pass | Inventive Example |
| 2 | A | 91 | 5 | 2.0 | θ | 0.004 | 70 | 0.118 | 1288 | 1571 | 82 | 40 | 93 | Pass | Inventive Example |
| 3 | A | 92 | 3 | 2.1 | θ | 0.004 | 66 | 0.117 | 1210 | 1572 | 77 | 40 | 158 | Pass | Inventive Example |
| 4 | B | 92 | 3 | 2.7 | θ | 0.003 | 76 | 0.124 | 1496 | 1739 | 86 | 36 | 142 | Pass | Inventive Example |
| 5 | C | 87 | 7 | 2.8 | θ | 0.009 | 83 | 0.129 | 1065 | 1224 | 87 | 47 | 78 | Pass | Inventive Example |
| 6 | C | 88 | 5 | 4.4 | θ | 0.008 | 89 | 0.127 | 1023 | 1248 | 82 | 45 | 85 | Pass | Inventive Example |
| 7 | C | 88 | 8 | 3.1 | θ | 0.003 | 81 | 0.127 | 891 | 1221 | 73 | 47 | 80 | Pass | Inventive Example |
| 8 | D | 94 | 2 | 2.9 | θ | 0.004 | 56 | 0.111 | 1727 | 2008 | 86 | 33 | 58 | Pass | Inventive Example |
| 9 | E | 48 | 51 | 0.2 | θ | 0.010 | 96 | 0.135 | 897 | 1008 | 89 | 51 | 43 | Pass | Inventive Example |
| 10 | E | <u>20</u> | <u>76</u> | 1.2 | θ | 0.005 | 93 | 0.135 | 495 | 952 | <u>2</u> | <u>20</u> | <u>224</u> | Pass | Comparative Example |
| 11 | E | 36 | 42 | <u>20.6</u> | θ | <u>0.017</u> | 95 | 0.136 | 741 | 1015 | 73 | <u>19</u> | <u>292</u> | <u>Failed</u> | Comparative Example |
| 12 | E | 54 | 43 | 0.3 | θ | 0.015 | 31 | 0.134 | 876 | 1030 | 85 | 30 | 200 | Pass | Inventive Example |

EP 4 696 801 A1

(continued)

| No. | Steel type | Area fraction of M (%) | Area fraction of a (%) | Volume fraction of retained γ (%) | Remaining microstructure | Amount of low-temperature diffusive hydrogen in base steel sheet 24 hours after production (mass ppm) | Number density of cracks penetrating through hot-dip galvanized layer (cracks/mm) | Full width at half maximum of δ1 phase in hot-dip galvanized layer (degrees) | YS (MPa) | TS (MPa) | YR (%) | λ immediately after production (%) | Bendability immediately after production (μm) | Quality of trimmed edge | Remarks |
|---|---|---|---|---|---|---|---|---|---|---|---|---|---|---|---|
| 13 | E | 15 | 79 | 1.8 | θ | 0.003 | 95 | 0.136 | 502 | 965 | 2 | 49 | 41 | Pass | Comparative Example |
| 14 | E | 4 | 71 | 21.7 | θ | 0.018 | 22 | 0.134 | 567 | 1050 | 4 | 16 | 286 | Failed | Comparative Example |
| 15 | E | 53 | 46 | 0.8 | θ | 0.023 | 18 | 0.094 | 882 | 1025 | 86 | 13 | 416 | Failed | Comparative Example |
| 16 | E | 22 | 76 | 0.8 | θ | 0.007 | 43 | 0.109 | 437 | 841 | 52 | 48 | 67 | Pass | Comparative Example |
| 17 | G | 43 | 33 | 21.2 | θ | 0.019 | 48 | 0.107 | 777 | 1022 | 76 | 21 | 259 | Failed | Comparative Example |
| 18 | H | 2 | 7 | 1.8 | θ | 0.019 | 24 | 0.107 | 325 | 602 | 4 | 26 | 284 | Failed | Comparative Example |
| 19 |  | 95 | 0 | 2.0 | θ | 0.019 | 44 | 0.110 | 818 | 1062 | 77 | 19 | 330 | Failed | Comparative Example |
| 20 | J | 89 | 6 | 3.2 | θ | 0.010 | 82 | 0.129 | 1374 | 1656 | 83 | 41 | 133 | Pass | Inventive Example |
| 21 | K | 93 | 1 | 2.5 | θ | 0.003 | 81 | 0.128 | 1370 | 1557 | 88 | 38 | 179 | Pass | Inventive Example |
| 22 | L | 91 | 6 | 2.3 | θ | 0.007 | 91 | 0.133 | 1196 | 1375 | 87 | 42 | 177 | Pass | Inventive Example |
| 23 | M | 95 | 0 | 4.2 | θ | 0.009 | 51 | 0.114 | 1580 | 1795 | 88 | 36 | 70 | Pass | Inventive Example |
| 24 | N | 91 | 3 | 3.2 | θ | 0.009 | 72 | 0.124 | 1246 | 1501 | 83 | 39 | 96 | Pass | Inventive Example |

| No. | Steel type | Area fraction of M (%) | Area fraction of a (%) | Volume fraction of retained γ (%) | Remaining microstructure | Amount of low-temperature diffusive hydrogen in base steel sheet 24 hours after production (mass ppm) | Number density of cracks penetrating through hot-dip galvanized layer (cracks/mm) | Full width at half maximum of δ1 phase in hot-dip galvanized layer (degrees) | YS (MPa) | TS (MPa) | YR (%) | λ immediately after production (%) | Bendability immediately after production (μm) | Quality of trimmed edge | Remarks |
|---|---|---|---|---|---|---|---|---|---|---|---|---|---|---|---|
| 25 | O | 90 | 5 | 4.3 | θ | 0.004 | 74 | 0.124 | 1200 | 1446 | 83 | 31 | 200 | Pass | Inventive Example |
| 26 | P | 83 | 4 | 10.6 | θ | 0.012 | 83 | 0.130 | 1616 | 2020 | 80 | 30 | 197 | Pass | Inventive Example |
| 27 | Q | 90 | 5 | 3.9 | θ | 0.009 | 65 | 0.116 | 1307 | 1613 | 81 | 36 | 99 | Pass | Inventive Example |
| 28 | R | 91 | 4 | 2.9 | θ | 0.015 | 32 | 0.128 | 1324 | 1488 | 89 | 31 | 193 | Pass | Inventive Example |
| 29 | S | 87 | 11 | 1.6 | θ | 0.007 | 86 | 0.130 | 1182 | 1442 | 82 | 40 | 77 | Pass | Inventive Example |
| 30 | T | 80 | 9 | 10.1 | θ | 0.013 | 82 | 0.127 | 1243 | 1593 | 78 | 31 | 192 | Pass | Inventive Example |
| 31 | U | 94 | 0 | 2.3 | θ | 0.002 | 88 | 0.127 | 1440 | 1582 | 91 | 46 | 0 | Pass | Inventive Example |
| 32 | V | 93 | 3 | 2.0 | θ | 0.014 | 37 | 0.102 | 1447 | 1573 | 92 | 31 | 192 | Pass | Inventive Example |
| 33 | W | 91 | 4 | 2.4 | θ | 0.001 | 98 | 0.137 | 1436 | 1578 | 91 | 52 | O | Pass | Inventive Example |
| 34 | X | 94 | 1 | 3.6 | θ | 0.015 | 38 | 0.121 | 1436 | 1689 | 85 | 30 | 197 | Pass | Inventive Example |

Underline: Outside the corresponding range.
M: martensite, a: ferrite and/or bainitic ferrite, retained γ: retained austenite, θ: cementite and/or metastable carbides

EP 4 696 801 A1

The embodiments of the invention have been described. However, the invention is not limited to the description of the embodiments that forms part of the disclosure of the invention. Specifically, other embodiments, Examples, operating techniques, etc. made based on the embodiments by those skilled in the art are all within the scope of the invention. For example, in the series of heat treatments in the production method described above, no particular limitation is imposed on the facilities etc. used to heattreat the steel sheet, so long as the thermal history conditions are satisfied.

Industrial Applicability

According to the present invention, a hot-dip galvanized steel sheet that exhibits good stretch flangeability and good bendability and provides high trimmed edge quality and high part strength can be obtained.
In particular, the hot-dip galvanized steel sheet of the invention can provide high trimmed edge quality and can therefore be used for automobile framework structural parts with different sizes and shapes while high component strength is ensured. This allows a reduction in vehicle body weight, and the fuel economy can thereby be improved, so that the high strength steel sheet is extremely valuable for industrial applications.

**Claims**

1.  A hot-dip galvanized steel sheet comprising: a base steel sheet; and a hot-dip galvanized layer on a surface of the base steel sheet,

    wherein the base steel sheet has a chemical composition containing, in % by mass,
    C: 0.030% or more and 0.500% or less,
    Si: 0.01% or more and 2.50% or less,
    Mn: 0.10% or more and 5.00% or less,
    P: 0.100% or less,
    S: 0.0200% or less,
    Al: 0.100% or less,
    N: 0.0100% or less, and
    O: 0.0100% or less,
    with the balance being Fe and incidental impurities,
    wherein the base steel sheet has, at a position 1/4 of a thickness of the base steel sheet, a microstructure including martensite at an area fraction of 30% or more,
    ferrite at an area fraction of 70% or less, and
    retained austenite at a volume fraction of 20.0% or less,
    wherein an amount of low-temperature diffusive hydrogen is 0.015 ppm by mass or less, the amount of low-temperature diffusive hydrogen being an amount of hydrogen released from the base steel sheet when the base steel sheet is heated from room temperature to 50°C 24 hours after production of the hot-dip galvanized steel sheet,
    wherein, in the hot-dip galvanized layer,
    a number density of cracks penetrating through the hot-dip galvanized layer is 30 cracks/mm or more, and
    wherein a full width at half maximum of a $\delta 1$ phase in the hot-dip galvanized layer is 0.100 degrees or more.

2.  The hot-dip galvanized steel sheet according to claim 1, wherein the chemical composition further contains, in % by mass, at least one element selected from

    Ti: 0.200% or less,
    Nb: 0.200% or less,
    V: 0.200% or less,
    Ta: 0.10% or less,
    W: 0.10% or less,
    B: 0.0100% or less,
    Cr: 1.00% or less,
    Mo: 1.00% or less,
    Co: 0.010% or less,
    Ni: 1.00% or less,
    Cu: 1.00% or less,
    Sn: 0.200% or less,

Sb: 0.200% or less,
Ca: 0.0100% or less,
Mg: 0.0100% or less,
REMs: 0.0100% or less,
Zr: 0.100% or less,
Te: 0.100% or less,
Hf: 0.10% or less, and
Bi: 0.200% or less.

3. The hot-dip galvanized steel sheet according to claim 1 or 2, wherein the hot-dip galvanized layer is a hot-dip galvannealed layer.

4. A member provided using the hot-dip galvanized steel sheet according to any one of claims 1 to 3.

5. An automotive framework structural part or an automotive reinforcing part, wherein the automotive framework structural part or the automotive reinforcing part comprises the member according to claim 4.

6. A method for producing a hot-dip galvanized steel sheet, the method comprising:

hot-rolling a steel slab having the chemical composition according to claim 1 or 2 to obtain a hot rolled steel sheet;
pickling the hot rolled sheet to obtain a pickled sheet;
subjecting the pickled sheet to cold rolling at a cumulative rolling reduction ratio of 20% or more and 75% or less to obtain a cold rolled steel sheet;
annealing the cold rolled steel sheet under a condition of a heating temperature of 780°C or higher;
subjecting the resulting cold rolled steel sheet to hot-dip galvanizing treatment to obtain a galvanized steel sheet;
cooling the galvanized steel sheet under a condition of an average cooling rate of 1.0°C/s or more in a temperature range of 250°C or higher and 400°C or lower; and
subjecting the resulting galvanized steel sheet to working such that a uniaxial tensile strain of 0.1% or more is imparted to a surface layer of the galvanized steel sheet.

7. The method for producing a hot-dip galvanized steel sheet according to claim 6, wherein, during the cooling of the galvanized steel sheet, heat retention is performed in a temperature range of 100°C or higher and 450°C or lower for 5 seconds or longer, and the resulting galvanized steel sheet is cooled and then subjected to the working.

8. The method for producing a hot-dip galvanized steel sheet according to claim 6, wherein, during the cooling of the galvanized steel sheet, the cooling is stopped at a cooling stop temperature of 250°C or lower, and then the galvanized steel sheet is reheated to a reheating temperature range of (the cooling stop temperature + 50°C) or higher and 450°C or lower, subjected to heat retention in the reheating temperature range for 5 seconds or longer, cooled, and then subjected to the working.

9. The method for producing a hot-dip galvanized steel sheet according to claim 6, wherein, during the cooling of the galvanized steel sheet, the cooling is stopped at a cooling stop temperature of 250°C or lower, and then the galvanized steel sheet is subjected to the working, reheated to a reheating temperature range of (the cooling stop temperature + 50°C) or higher and 450°C or lower, subjected to heat retention in the reheating temperature range for 5 seconds or longer, and then cooled.

10. The method for producing a hot-dip galvanized steel sheet according to any one of claims 6 to 9, wherein, after the hot-dip galvanizing treatment, the steel sheet is subjected to galvannealing treatment.

11. The method for producing a hot-dip galvanized steel sheet according to any one of claims 6 to 10, wherein the cold rolling is performed such that a sheet traveling speed in a final pass is 50 mpm or more.

12. A method for producing a member, the method comprising the step of subjecting the hot-dip galvanized steel sheet according to any one of claims 1 to 3 to at least one of forming and joining to produce the member.

# INTERNATIONAL SEARCH REPORT

| | International application No. |
|---|---|
| | **PCT/JP2024/018163** |

**A. CLASSIFICATION OF SUBJECT MATTER**

*C22C 38/00*(2006.01)i; *C21D 9/46*(2006.01)i; *C22C 38/06*(2006.01)i; *C22C 38/60*(2006.01)i; *C23C 2/06*(2006.01)i; *C23C 2/26*(2006.01)i

FI:   C22C38/00 301T; C22C38/06; C22C38/60; C21D9/46 J; C23C2/06; C23C2/26

According to International Patent Classification (IPC) or to both national classification and IPC

**B. FIELDS SEARCHED**

Minimum documentation searched (classification system followed by classification symbols)

C22C38/00-38/60; C21D9/46-9/48; C23C2/00-2/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/072479 A1 (NIPPON STEEL & SUMITOMO METAL CORPORATION) 12 May 2016 (2016-05-12) paragraphs [0002], [0012]-[0049], [0071], [0076]-[0124], tables 1-22 | 1-2, 4-8, 12 |
| A | | 3, 9-11 |
| A | JP 11-200000 A (SUMITOMO METAL INDUSTRIES, LTD.) 27 July 1999 (1999-07-27) claims 1-2, examples | 1-12 |
| A | JP 2006-183090 A (KABUSHIKI KAISHA KOBE SEIKO SHO) 13 July 2006 (2006-07-13) paragraphs [0008]-[0018] | 1-12 |
| A | WO 2020/136990 A1 (JFE STEEL CORPORATION) 02 July 2020 (2020-07-02) paragraph [0008], examples | 1-12 |
| A | WO 2022/091529 A1 (JFE STEEL CORPORATION) 05 May 2022 (2022-05-05) paragraphs [0030]-[0033], [0075] | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

<table>
<tr><td colspan="2" style="text-align:center">INTERNATIONAL SEARCH REPORT<br>Information on patent family members</td><td colspan="2">International application No.<br><br>**PCT/JP2024/018163**</td></tr>
</table>

| Patent document cited in search report | Publication date (day/month/year) | Patent family member(s) | Publication date (day/month/year) |
|---|---|---|---|
| WO 2016/072479 A1 | 12 May 2016 | EP 3216886 A1 paragraphs [0003], [0016]-[0055], [0084], [0093]-[0165], tables 1-22 <br> BR 112017008311 A2 <br> CN 107148487 A <br> KR 10-2017-0063785 A <br> MX 2017005507 A <br> TW 201623652 A <br> US 2017/0314116 A1 | |
| JP 11-200000 A | 27 July 1999 | (Family: none) | |
| JP 2006-183090 A | 13 July 2006 | (Family: none) | |
| WO 2020/136990 A1 | 02 July 2020 | EP 3904554 A1 paragraph [0008], examples <br> CN 113227430 A <br> KR 10-2021-0095190 A <br> MX 2021007806 A <br> US 2022/0090223 A1 | |
| WO 2022/091529 A1 | 05 May 2022 | EP 4215294 A1 paragraphs [0030]-[0033], [0075] <br> CN 116348215 A <br> KR 10-2023-0069975 A <br> MX 2023004567 A <br> US 2023/0392226 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6777267 B

**Non-patent literature cited in the description**

- **N.L. OKAMOTO ; K. TANAKA ; A. YASUHARA ; H. INUI**. *Acta Cryst.*, 2014, vol. B70, 275